# EUROPÄISCHE PATENTANMELDUNG

(11) **EP 4 822 221 A1**
(43) Veröffentlichungstag der Anmeldung: **14.10.2026**
(21) Anmeldenummer: 25168778.6
(22) Anmeldetag: 07.04.2025
(51) Int. Cl.: F16J 15/16, F16J 15/3236, F16J 15/48, B63H 25/30

(54) **DICHTUNGSEINRICHTUNG FÜR EINE DREHFLÜGELRUDERMASCHINE**

(71) Anmelder: Becker Marine Systems GmbH, 21079 Hamburg (DE)
(72) Erfinder: WENDT, Menno, 21079 Hamburg (DE); EICKMANN, Adrian, 21079 Hamburg (DE); KNIEFS, Matthias, 21079 Hamburg (DE)
(74) Vertreter: RGTH

(57) **Zusammenfassung**

Um eine Dichtungseinrichtung (101, 102) zum Abdichten einer feststehenden Trennwand (10) oder eines Drehflügels (11) einer Drehflügelrudermaschine (200) bereitzustellen, welche ein effektives Dichtungssystem umfasst, welches darüber hinaus einfach zu warten ist, wird eine Dichtungseinrichtung (101, 102) vorgeschlagen, wobei die Dichtungseinrichtung (101, 102) zumindest abschnittweise entlang der Trennwand (10) oder des Drehflügels (11) anordbar ist, wobei die Dichtungseinrichtung (101, 102) wenigstens ein erstes Dichtungselement (12) umfasst, wobei das erste Dichtungselement (12, 12') eine erste Dichtfläche (13a, 13a') und eine erste Ausnehmung (14a, 14a') umfasst, wobei die erste Ausnehmung (14a, 14a') derart in dem ersten Dichtungselement (12) angeordnet ist, dass eine Fluidverbindung zwischen der ersten Ausnehmung (14a, 14a') und einem von der Dichtungseinrichtung (101, 102) abzudichtenden ersten Raum (A1), insbesondere einem ersten Hydraulikraum der Drehflügelrudermaschine (200), herstellbar ist, wobei die erste Ausnehmung (14a, 14a') derart in dem Dichtungselement (12, 12') angeordnet ist, dass bei einer Füllung der ersten Ausnehmung (14a, 14a') mit einem druckbeaufschlagten Fluid aus dem ersten Raum (A1) die Dichtungseinrichtung (101, 102) im Bereich der ersten Dichtfläche (13a, 13a') zumindest bereichsweise an eine der ersten Dichtfläche (13a, 13a') gegenüberliegende Gegenfläche (16) anpressbar ist.

## Beschreibung

Die Erfindung betrifft eine Dichtungseinrichtung zum Abdichten einer feststehenden Trennwand oder eines Drehflügels einer Drehflügelrudermaschine, eine Drehflügelrudermaschine umfassend eine solche Dichtungseinrichtung sowie ein Verfahren zum Montieren einer solchen Drehflügelrudermaschine.

Drehflügelrudermaschinen werden zur Steuerung von Wasserfahrzeugen mittels eines Ruders eingesetzt, wobei eine Rotation des Ruders durch eine hydraulisch erzeugte Kraft erfolgt. Die Kraft wird durch einen Druck erzeugt, welcher in Hydraulikräumen der Drehflügelrudermaschine erzeugt wird, wobei die Hydraulikräume unter anderem durch feststehende Trennwände und jeweils zwischen den Trennwänden rotationsbewegliche und mit dem Ruderschaft des Ruders verbundene Drehflügel gelagert sind. Durch Zuführen von Hydraulikflüssigkeit in einige der Hydraulikräume und Erzeugen eines Hydraulikdrucks wird eine Rotationsbewegung der beweglichen Drehflügel und somit des Ruders bewirkt. Zwischen zwei feststehenden Trennwänden sind jeweils zwei Hydraulikräume ausgebildet und durch einen Drehflügel getrennt, wobei die beiden Hydraulikräume wahlweise je nach gewünschter Drehrichtung des Ruders mit dem Hydraulikdruck beaufschlagt werden.

Für einen effizienten Betrieb von Drehflügelrudermaschinen ist eine Abdichtung der Hydraulikräume voneinander essentiell. Hier sind aus dem Stand der Technik verschiedene Dichtungssysteme bekannt, welche üblicherweise im Bereich der Drehflügel und der Trennwände angeordnet werden, um insbesondere auch während der Rotation der Drehflügel eine möglichst gute Abdichtung zu erzielen und eine Leckage von Hydraulikflüssigkeit von einem Hydraulikraum in den jeweils angrenzenden Hydraulikraum zu verhindern. Allerdings kommt es bei bekannten Systemen immer noch häufig zu unerwünschten Leckagen von Hydraulikflüssigkeit.

Ferner ist ein Wechsel von Dichtungen in bekannten Dichtungssystemen in der Regel nur mit hohem Aufwand möglich, da meist ein vollständiger Ausbau des Drehflügels notwendig ist. Auch hier besteht Optimierungsbedarf im Hinblick auf die Wartung des Dichtungssystems der Drehflügelrudermaschine.

Der Erfindung liegt daher die Aufgabe zugrunde, eine Dichtungseinrichtung für eine Drehflügelrudermaschine bereitzustellen, welche ein effektives Dichtungssystem umfasst, welches darüber hinaus einfach zu warten ist.

Die erfindungsgemäße Aufgabe wird gelöst durch eine Dichtungseinrichtung zum Abdichten einer feststehenden Trennwand oder eines Drehflügels einer Drehflügelrudermaschine, wobei die Dichtungseinrichtung zumindest abschnittweise entlang der Trennwand oder des Drehflügels anordbar ist, wobei die Dichtungseinrichtung wenigstens ein erstes Dichtungselement umfasst, wobei das erste Dichtungselement eine erste Dichtfläche und eine erste Ausnehmung umfasst, wobei die erste Ausnehmung derart in dem ersten Dichtungselement angeordnet ist, dass eine Fluidverbindung zwischen der ersten Ausnehmung und einem von der Dichtungseinrichtung abzudichtenden ersten Raum, insbesondere einem ersten Hydraulikraum der Drehflügelrudermaschine, herstellbar ist, wobei die erste Ausnehmung derart in dem Dichtungselement angeordnet ist, dass bei einer Füllung der ersten Ausnehmung mit einem druckbeaufschlagten Fluid aus dem ersten Raum die Dichtungseinrichtung im Bereich der ersten Dichtfläche zumindest bereichsweise an eine der ersten Dichtfläche gegenüberliegende Gegenfläche anpressbar ist.

Die Dichtungsanordnung ist insbesondere an der feststehenden Trennwand bzw. dem beweglich in der Drehflügelrudermaschine gelagerten Drehflügel angeordnet, um den zwischen je einer Trennwand und einem Drehflügel ausgebildeten Hydraulikraum der Drehflügelrudermaschine abzudichten und eine Leckage von Hydraulikflüssigkeit von einem Hydraulikraum in einen benachbarten Hydraulikraum zu verhindern bzw. zu minimieren.

Die Dichtungseinrichtung ermöglicht es auf vorteilhafte Weise Leckagen von Hydraulikflüssigkeit zwischen den Hydraulikräumen zu verhindern bzw. zu minieren, da der Druck aus dem ersten Raum, welcher insbesondere ein Hochdruckraum ist, genutzt werden kann, um die Dichtungseinrichtung im Bereich des Dichtspalts an die Gegenfläche zu pressen, wobei das Druckbeaufschlagungsprinzip hier insbesondere vorteilhaft selbstverstärkend wirkt.

Die Anpressung der ersten Dichtfläche an die Gegenfläche erfolgt durch einen von innen nach außen gerichteten Druck ausgehend von der Dichtungseinrichtung. Die Richtung der Druckbeaufschlagung nach außen ist dabei senkrecht zur ersten Dichtfläche orientiert.

Die Dichtungseinrichtung ist dabei insbesondere vollständig oder bereichsweise entlang, insbesondere einer Außenseite oder einer Innenseite, der Trennwand oder des Drehflügels anordbar. Die Außenseite bzw. Innenseite der Trennwand bzw. des Drehflügels ist eine in Bezug auf die Rotationsachse des Ruders betrachtet radial außenliegende oder eine radial innenliegende Seite der Trennwand bzw. des Drehflügels, welche insbesondere an Innenwände der Drehflügelrudermaschine angrenzen. Die Innenwände der Drehflügelrudermaschine bilden dabei insbesondere teilweise die Hydraulikräume zusammen mit den Trennwänden und den Drehflügeln. Darüber hinaus ist es auch denkbar, dass sich die Dichtungsanordnung auch zumindest bereichsweise oder vollständig entlang einer Oberseite und/oder einer Unterseite der Trennwand oder des Drehflügels erstreckt. Insbesondere ist es denkbar, dass sich die Dichtungsanordnung vollständig entlang der umlaufenden Seiten der Trennwand oder des Drehflügels erstreckt.

Die Außenseite, die Innenseite, die Oberseite und die Unterseite bilden insbesondere jene Seiten der Trennwand bzw. des Drehflügels, welche nicht den Hydraulikräumen zugewandt sind. Die Außenseite, die Innenseite, die Oberseite und die Unterseite bilden zusammen eine umlaufende, geschlossene Seitenfläche.

Die Dichtungseinrichtung weist wenigstens eine erste Dichtfläche auf, welche an einer Gegenfläche der Drehflügelrudermaschine angeordnet ist. Insbesondere ist die Gegenfläche die Innenwand der Drehflügelrudermaschine bzw. ein Bereich der Innenwand der Drehflügelmaschine. Die erste Dichtfläche ist insbesondere eine der Außenseite bzw. der Innenseite der Trennwand bzw. des Drehflügel angewandte Fläche des Dichtelements, wenn die Dichtungseinrichtung an der Trennwand bzw. dem Drehflügel angeordnet ist.

Die Dichtungseinrichtung ist bevorzugt einteilig ausgebildet bzw. wird bevorzugt ausschließlich durch das Dichtungselement gebildet. Alternativ kann die Dichtungseinrichtung mehrteilig ausgeführt sein umfassend mehrere Dichtungselemente.

Die erste Ausnehmung ist bevorzugt ein in dem Dichtungselement ausgebildeter Hohlraum mit einer Öffnung, durch welche ein Fluid, insbesondere die Hydraulikflüssigkeit, in die Ausnehmung bzw. den Hohlraum eintreten kann, insbesondere während des Betriebes der Drehflügelrudermaschine. Die erste Ausnehmung ist insbesondere derart ausgestaltet, dass ausschließlich Fluid von einer der beiden benachbarten Hydraulikräume in die Ausnehmung fließen kann.

Die Druckbeaufschlagung durch das Fluid in der ersten Ausnehmung ist insbesondere dadurch möglich, dass die erste Ausnehmung benachbart zur ersten Dichtfläche angeordnet ist. Bevorzugt ist die erste Ausnehmung durch einen Trennabschnitt, beispielsweise einen Wandabschnitt, des Dichtungselements von der ersten Dichtfläche getrennt. Dabei kann die erste Dichtfläche eine der ersten Ausnehmung abgewandte Wandfläche des Trennabschnitts bzw. des Wandabschnitts bilden. Das Fluid übt dabei einen Druck auf den Trennabschnitt bzw. den Wandabschnitt aus, welcher entsprechend die erste Dichtfläche gegen die gegenüberliegende Gegenfläche presst.

Bevorzugt ist zwischen der ersten Dichtfläche und der Gegenfläche ein Dichtspalt der Dichtungseinrichtung ausgebildet.

Der erste Raum bzw. der erste Hydraulikraum ist dabei insbesondere jener Raum, welcher im Betrieb der Drehflügelrudermaschine der Hochdruckraum ist zur Durchführung der vorbestimmten Ruderbewegung. Während des Betriebs der Drehflügelrudermaschine variiert der Druck in den einzelnen Räumen, sodass der erste Raum auch der Niederdruckraum sein kann bei entsprechender Ruderbewegung entgegen der zuvor erwähnten vorbestimmten Ruderbewegung. In diesem Fall ist ein zweiter der Dichtungseinrichtung benachbarter Raum der Hochdruckraum. Auch hier kann bevorzugt eine zweite Ausnehmung vorgesehen sein wie nachfolgend noch im Detail beschrieben wird. Je nach dem, welcher der Räume mit dem Fluid verbunden sein soll, ist die Öffnung der jeweiligen Ausnehmung entsprechend auf einer dem jeweiligen Raum zugeordneten Seite der Dichtungseinrichtung angeordnet.

Bevorzugt ist innerhalb der ersten Ausnehmung eine Druckbeaufschlagungsfläche vorgesehen, über welche der Druck des Fluids in der ersten Ausnehmung über die erste Dichtfläche auf die Gegenfläche übertragen wird, um die erste Dichtfläche an die Gegenfläche anzupressen. Die Druckbeaufschlagungsfläche ist insbesondere im Wesentlichen parallel zur ersten Dichtfläche angeordnet.

Bevorzugt ist die erste Ausnehmung eine schlitzartige Vertiefung, welche sich entlang, bevorzugt im Wesentlichen parallel zu, der ersten Dichtfläche erstreckt. Die schlitzartige Vertiefung ist bevorzugt durch den Trennabschnitt bzw. den Wandabschnitt von der ersten Dichtfläche getrennt. Dabei bildet bevorzugt ein Bereich einer Innenwandung der schlitzartigen Vertiefung die Druckbeaufschlagungsfläche. Durch die schlitzartige Vertiefung wird besonders vorteilhaft eine effektive Anpressung der ersten Dichtfläche an die Gegenseite gewährleistet, da die Druckbeaufschlagung über einen großen Bereich der ersten Dichtfläche erfolgen kann.

Bevorzugt erstreckt sich die erste Ausnehmung wenigstens über 50% einer Breite der ersten Dichtungsfläche. Dadurch wird eine besonders effektive Abdichtung durch Anpressung der ersten Dichtfläche an die Gegenfläche erreicht, da die Druckübertragung seitens der ersten Ausnehmung über eine besonders große Fläche erfolgt. Dadurch, dass insbesondere wenigstens 50% einer Breite der ersten Dichtungsfläche mit dem Druck beaufschlagt werden, kann sich die erste Dichtungsfläche insbesondere an eine konvex oder konkav ausgestaltete Gegenfläche anschmiegen und so die Dichtwirkung erhöhen, sodass eine effektive Abdichtung im Bereich der konvex bzw. konkav geformten Innenwände einer Drehflügelrudermaschine erfolgen kann.

Unter der Breite einer Dichtfläche bzw. der ersten Dichtfläche ist dabei die Erstreckung der ersten Dichtfläche von dem ersten abzudichtenden Raum zu dem zweiten abzudichtenden Raum zu verstehen. Bei Vorliegen einer Leckage würde das Fluid sich entlang der Breite der Dichtfläche bewegen. Im in der Drehflügelrudermaschine eingebauten Zustand würde sich die Breite der Dichtfläche entlang eines Umfangs der äußeren und inneren Innenwände der Hydraulikräume erstrecken.

Bevorzugt gehört die erste Ausnehmung zu einer ersten Ausnehmungsgruppe des ersten Dichtungselements, wobei die erste Ausnehmungsgruppe eine Vielzahl von, insbesondere identisch geformten, Ausnehmungen, insbesondere zwei oder drei Ausnehmungen, umfasst, welche jeweils derart in dem ersten Dichtungselement angeordnet sind, dass eine Fluidverbindung zwischen der jeweiligen Ausnehmung und dem von der Dichtungseinrichtung abzudichtenden ersten Raum, insbesondere dem ersten Hydraulikraum der Drehflügelrudermaschine, herstellbar ist, wobei jede der Ausnehmungen derart in dem Dichtungselement angeordnet ist, dass bei einer Füllung der jeweiligen Ausnehmung mit einem druckbeaufschlagten Fluid aus dem ersten Raum die Dichtungseinrichtung im Bereich der ersten Dichtfläche zumindest bereichsweise an eine der ersten Dichtfläche gegenüberliegende Gegenfläche anpressbar ist.

Durch die Vorsehung einer Vielzahl von Ausnehmungen, welche jeweils fluidisch mit dem ersten Raum verbunden sind, kann die Anpresswirkung der ersten Dichtfläche an die Gegenfläche entsprechend vorteilhaft erhöht werden. Dazu sind die Ausnehmungen insbesondere in einer Richtung senkrecht zur ersten Dichtfläche betrachtet übereinander über der ersten Dichtfläche angeordnet, sodass die Druckbeaufschlagung ausgehend von den einzelnen Ausnehmungen in gleicher Richtung auf die Gegenfläche erfolgt. Beispielweise kann die Dichtungseinrichtung in einer Querschnittbetrachtung entlang der Breite der Dichtfläche kammförmig ausgebildet sein, wobei die Zacken des Kamms durch die einzelnen Ausnehmungen gebildet werden.

Bevorzugt umfasst das erste Dichtungselement wenigstens eine zweite Ausnehmung, wobei die zweite Ausnehmung derart in dem ersten Dichtungselement angeordnet ist, dass eine Fluidverbindung zwischen der zweiten Ausnehmung und einem von der Dichtungseinrichtung abzudichtenden zweiten Raum, insbesondere einem zweiten Hydraulikraum der Drehflügelrudermaschine, herstellbar ist, wobei die zweite Ausnehmung derart in dem Dichtungselement angeordnet ist, dass bei einer Füllung der zweiten Ausnehmung mit einem druckbeaufschlagten Fluid aus dem zweiten Raum die Dichtungseinrichtung im Bereich der ersten Dichtfläche zumindest bereichsweise an eine der ersten Dichtfläche gegenüberliegende Gegenfläche anpressbar ist.

Die zweite Ausnehmung ist bevorzugt im Hinblick auf Form und/oder Größe im Wesentlichen gleich ausgestaltet wie die erste Ausnehmung mit dem Unterschied, dass die zweite Ausnehmung fluidisch mit dem zweiten Raum, welcher insbesondere benachbart zum ersten Raum und durch die Trennwand oder den Drehflügel von diesem getrennt ist, verbunden ist. Alternativ können die Ausnehmungen im Hinblick auf Form und/oder Größe unterschiedlich ausgestaltet sein.

Durch die Vorsehung der zweiten Ausnehmung wird vorteilhaft erreicht, dass unabhängig davon, welcher des ersten oder des zweiten Raums im derzeitigen Betriebsmodus der Drehflügelrudermaschine die Hochdruckseite bzw. den Hochdruckraum darstellt, eine effektive Anpressung der ersten Dichtfläche an die Gegenfläche erfolgen kann. Während des Betriebs der Drehflügelrudermaschine sind insbesondere sowohl die erste als auch die zweite Ausnehmung mit Fluid aus dem jeweiligen Raum gefüllt, wobei jedoch eine Ausnehmung mit einem Hochdruckfluid und die andere Ausnehmung demgegenüber mit einem Niederdruckfluid gefüllt ist.

Bevorzugt gehört die zweite Ausnehmung zu einer zweiten Ausnehmungsgruppe des ersten Dichtungselements, wobei die zweite Ausnehmungsgruppe eine Vielzahl von, insbesondere identisch geformten, Ausnehmungen, insbesondere 2 oder 3 Ausnehmungen, umfasst, welche jeweils derart in dem ersten Dichtungselement angeordnet sind, dass eine Fluidverbindung zwischen der jeweiligen Ausnehmung und dem von der Dichtungseinrichtung abzudichtenden zweiten Raum, insbesondere dem zweiten Hydraulikraum der Drehflügelrudermaschine, herstellbar ist, wobei jede der Ausnehmungen derart in dem Dichtungselement angeordnet ist, dass bei einer Füllung der jeweiligen Ausnehmung mit einem druckbeaufschlagten Fluid aus dem zweiten Raum die Dichtungseinrichtung im Bereich der ersten Dichtfläche zumindest bereichsweise an eine der ersten Dichtfläche gegenüberliegende Gegenfläche anpressbar ist.

Die zweite Ausnehmungsgruppe bzw. die Ausnehmungen der zweiten Ausnehmungsgruppe können bevorzugt im Wesentlichen identisch zur ersten Ausnehmungsgruppe ausgebildet sein. Dies gilt insbesondere im Hinblick auf deren Firm, Größe sowie Anordnung zueinander und/oder zur ersten Dichtfläche.

Durch die zweite Ausnehmungsgruppe werden im Wesentlichen die gleichen Vorteile erreicht wie für die erste Ausnehmungsgruppe, nämlich eine verstärkte Anpressung der ersten Dichtfläche durch Druckbeaufschlagung durch das Fluid des zweiten Raums.

Bevorzugt überlagern sich die Ausnehmungen der ersten Ausnehmungsgruppe und der zweiten Ausnehmungsgruppe und/oder jeweils die Ausnehmungen einer zweiten und/oder ersten Ausnehmungsgruppe untereinander in einer Richtung senkrecht zur Dichtfläche betrachtet, insbesondere derart, dass das erste Dichtungselement in einer Querschnittsbetrachtung entlang einer Breite des Dichtungselements zumindest abschnittweise oder vollständig mäanderförmig ausgestaltet ist, wobei bevorzugt sämtliche Ausnehmungen der ersten Ausnehmungsgruppe und der zweiten Ausnehmungsgruppe die gleiche Form aufweisen.

Bevorzugt weist jede der Ausnehmungen eine Druckbeaufschlagungsfläche auf, wobei die Druckbeaufschlagungsflächen bzw. die Ausnehmungen an sich insbesondere in einer Richtung senkrecht zur ersten Dichtfläche betrachtet übereinander über der ersten Dichtfläche angeordnet sind, sodass die Druckbeaufschlagung ausgehend von den einzelnen Ausnehmungen in gleicher Richtung auf die Gegenfläche erfolgt.

Bevorzugt umfasst das erste Dichtungselement Polyoxymethylen-Homopolymer, oder Polyoxymethlyen Copolymer oder Mischungen hieraus oder besteht aus Polyoxymethylen-Homopolymer, oder Polyoxymethlyen Copolymer oder Mischungen hieraus.

Bevorzugt weist das erste Dichtungselement eine längliche Form auf, derart, dass dieser sich im in der Drehflügelrudermaschine eingebauten Zustand ausschließlich entlang einer Längsseite bzw. Längskante der Trennwand oder des Drehflügels erstreckt.

Bevorzugt umfasst die Trennwand und/oder der Drehflügel jeweils an einer oder an beiden äußeren Längsseiten eine Nut, in welche jeweils eine Dichtungseinrichtung einsetzbar ist. Bevorzugt ist die Dichtungseinrichtung durch die zuvor beschriebene bevorzugte Materialwahl derart starr ausgebildet, dass die Dichtungseinrichtung in die Nut der Trennwand bzw. des Drehflügels eingesetzt werden kann, wenn die Trennwand bzw. der Drehflügel bereits in der Drehflügelrudermaschine installiert ist. Dies vereinfacht die Wartung vorteilhaft. Insbesondere verläuft die Nut ausschließlich an der jeweiligen äußeren Längsseite der Trennwand bzw. des Drehflügels und nicht entlang einer jeweiligen Oberseite und Unterseite.

Ferner kann das erste Dichtungselement rahmenartig ausgebildet sein, derart, dass sich das Dichtungselement entlang einer ersten Längskante des Drehflügels und entlang einer zweiten Längskante des Drehflügels erstreckt, wobei bevorzugt das erste Dichtungselement zweiteilig ausgebildet ist mit einem ersten Dichtungselementteil und einem zweiten Dichtungselementteil, und wobei der erste und der zweite Dichtungselementteil derart zu einer rahmenartigen Form zusammensetzbar sind, dass eine im Wesentlichen geschlossene, um den ersten und den zweiten Dichtungselementteil umlaufende Dichtfläche bildbar ist. Insbesondere bilden die beiden Dichtungselementteile Hälften des rahmenförmigen ersten Dichtungselements.

Insbesondere werden die beiden Dichtungselementteile zuerst zusammengesetzt und anschließend an den Drehflügel bzw. ein nachfolgend noch näher beschriebenes Dichtungsaufnahmeelement angeordnet. Ferner erfolgt die Fixierung des ersten Dichtungselements an dem Dichtungsaufnahmeelement mittels einer ebenfalls nachfolgend noch näher beschriebenen Halteeinrichtung.

Bevorzugt bilden die beiden Dichtungselementteile bezogen auf dem im Schiff eingebauten Zustand einen oberen und einen unteren Teil des ersten Dichtungselements. Insbesondere weist das erste Dichtungselement zwei Langseiten und zwei Kurzseiten auf. Die beiden Dichtungselementsteile sind gebildet durch eine gedachte Durchbrechung des Dichtungselements an dessen Langseiten. Entsprechend sind zwei Verbindungsstellen zwischen dem ersten und dem zweiten Dichtungselementteil an den Langseiten des ersten Dichtungselements angeordnet. Alternativ wäre es auch denkbar, dass die Verbindungsstellen an den Kurzseiten des ersten Dichtungselements angeordnet sind.

Die beiden Dichtungselementteile können vorteilhaft jeweils separat an dem Drehflügel seitlich eingesetzt und anschließend zu einem umlaufenden, rahmenartigen Dichtelement zusammengesetzt werden. Bevorzugt weist der Drehflügel hierfür eine umlaufende Nut bzw. Vertiefung auf, in welche die beiden Dichtungselementteile eingesetzt und dort gehalten werden. In diesem Fall ist insbesondere keine Halteeinrichtung zum Fixieren des Dichtungselements an dem Drehflügel vorhanden, sondern das Dichtungselement ist alleinig durch die Anordnung in der umlaufenden Nut an dem Drehflügel bzw. an einem Dichtungsaufnahmeelement gehalten.

Bevorzugt weist das erste Dichtungselement genau eine oder zwei umlaufende Ausnehmungen auf. Im Falle zweier Ausnehmungen sind bevorzugt eine äußere und eine innere umlaufende Ausnehmung vorgesehen. Die Ausnehmungen stehen insbesondere in Fluidverbindung mit dem jeweils an die Dichtungseinrichtung angrenzenden Hydraulikraum, sodass eine Druckbeaufschlagung mit dem Hydraulikdruck erfolgen kann zum Verbessern der Dichtwirkung.

Bevorzugt weist das erste Dichtungselement eine entlang eines äußeren Umfangs verlaufende äußere, insbesondere umlaufend geschlossene, Dichtfläche und eine entlang eines inneren Umfangs verlaufende innere, insbesondere umlaufend geschlossene, Dichtfläche auf. Die äußere und innere Dichtfläche bilden jeweils innere und äußere Kanten des rahmenförmigen ersten Dichtungselements. Bevorzugt weisen die innere Dichtfläche und/oder die äußere Dichtfläche jeweils bezogen auf deren Erstreckung entlang der Breite der Dichtfläche einen schrägen Verlauf auf. Der schräge Verlauf bewirkt vorteilhaft, dass bei einer Erwärmung des Materials des Dichtungselements eine Vorspannung aufgebaut wird, welche die Dichtwirkung verbessert.

Bevorzugt weisen der erste und der zweite Dichtungselementteil jeweils eine Verbindungsstruktur auf zum, insbesondere formschlüssigen oder lückenschlüssigen, Verbinden des ersten mit dem zweiten Dichtungselementteil. Insbesondere sind die Verbindungsstrukturen des ersten und zweiten Dichtungselementteils komplementär zueinander ausgebildet. Insbesondere können die Verbindungsstrukturen miteinander in Eingriff gebracht, beispielsweise ineinander gesteckt, werden, sodass das erste und das zweite Dichtungselementteil miteinander verbunden sind. Dadurch können im Verbindungsbereich zwischen den beiden Dichtelementteilen vorteilhaft ein im Wesentlichen glatter Übergang und eine entsprechend gute Dichtwirkung erzielt werden. Bevorzugt sind die beiden Dichtungselementteile lösbar miteinander verbunden. Insbesondere sind die Verbindungsstrukturen derart ausgebildet, dass die beiden Dichtungselementteile in einer Ebene parallel zum Drehflügel starr miteinander verbunden sind.

Bevorzugt bilden die Verbindungsstrukturen eine Schwalbenschwanzverbindung.

Bevorzugt sind alternativ die Verbindungsstrukturen des ersten und des zweiten Dichtungselementteils zum Bilden einer Stoßverbindung ausgebildet, wobei bevorzugt die Verbindungsstrukturen jeweils schräg verlaufende Flächen zur Herstellung einer schrägen Stoßverbindung aufweisen oder wobei die Verbindungsstrukturen jeweils eine Stufe umfassen, welche zum Eingriff miteinander ausgebildet sind. Diese Art der Verbindung ist besonders einfach herstellbar.

Die erfindungsgemäße Aufgabe wird ferner gelöst durch eine Drehflügelrudermaschine umfassend wenigstens eine Dichtungseinrichtung mit den zuvor genannten Merkmalen.

Bevorzugt umfasst jede Trennwand und/oder jeder Drehflügel der Drehflügelrudermaschine jeweils wenigstens eine Dichtungseinrichtung. Bevorzugt sind die Dichtungseinrichtungen der Trennwände unterschiedlich zu denen der Drehflügel ausgebildet. Die Dichtungseinrichtung der Trennwände untereinander und der Drehflügel untereinander sind insbesondere gleich ausgeführt. Die Trennwände umfassen insbesondere zwei Dichtungseinrichtungen an deren Außenseite und Innenseite. Die Drehflügel umfassen bevorzugt jeweils zwei Dichtungseinrichtungen umfassend jeweils zwei zusammengesetzte Dichtungselemente.

Bevorzugt weist die Drehflügelrudermaschine einen Drehflügel zur abdichtenden Trennung eines ersten Hydraulikraums von einem zweiten Hydraulikraum mittels der Dichtungseinrichtung auf, wobei der Drehflügel wenigstens ein, bevorzugt zwei, Dichtungsaufnahmeelemente aufweist, wobei die Dichtungseinrichtung an dem Dichtungsaufnahmeelement angeordnet ist, wobei das Dichtungsaufnahmeelement zusammen mit der Dichtungseinrichtung lösbar an dem Drehflügel angeordnet ist.

Bevorzugt ist das Dichtungsaufnahmeelement zusammen mit der Dichtungseinrichtung von dem Drehflügel lösbar, wenn sich der Drehflügel im in der Drehflügelrudermaschine eingebauten Zustand befindet. Dadurch ist es vorteilhaft möglich, die Dichtungseinrichtung durch Entnahme des Dichtungsaufnahmeelements aus der Drehflügelrudermaschine zu wechseln, ohne, dass ein Auseinanderbauen der Drehflügelrudermaschine bzw. ein Ausbau der Drehflügel als solche erfolgen muss.

Bevorzugt umfasst der Drehflügel einen Drehflügelhauptkörper, wobei das Dichtungsaufnahmeelement lösbar an dem Drehflügelhauptkörper befestigt ist, wobei das Dichtungsaufnahmeelement eine erste Verbindungsschnittstelle und der Drehflügelhauptkörper eine zweite Verbindungsschnittstelle zur lösbaren Verbindung des Dichtungsaufnahmeelements mit dem Drehflügel aufweist, wobei die erste und die zweite Verbindungsschnittstelle bevorzugt formschlüssig miteinander verbindbar sind, wobei insbesondere eine der Verbindungsschnittstellen einen länglichen Verbindungsvorsprung aufweist und wobei der andere der beiden Verbindungsstellen eine komplementär zum länglichen Verbindungsvorsprung ausgebildete längliche Verbindungsvertiefung aufweist. Der längliche Verbindungsvorsprung kann in einer Querschnittsbetrachtung im Wesentlichen T-förmig ausgestaltet sein und die Verbindungsvertiefung ist entsprechend komplementär ausgebildet zur Aufnahme des Verbindungsvorsprungs. Alternativ sind der Drehflügelhauptkörper und das Dichtungsaufnahmeelement mittels einer Schwalbenschwanzverbindung miteinander verbunden.

Somit ist vorteilhaft ein Lösen des Dichtungsaufnahmeelements von dem Drehflügelhauptkörper möglich, indem der längliche Verbindungsvorsprung im in der Drehflügelmaschine eingebauten Zustand des Drehflügels von oben in die Verbindungsvertiefung eingeschoben werden. Analog ist das Aufschieben der Verbindungsvertiefung des Dichtungsaufnahmeelements auf den Verbindungsvorsprung des Drehflügelhauptkörpers möglich, wenn die beiden Verbindungsschnittstellen in umgekehrter Art ausgebildet sind.

Bevorzugt weist der Drehflügel zwei, insbesondere im Wesentlichen identisch ausgebildete, Dichtungsaufnahmeelemente mit jeweils einer Dichtungseinrichtung auf, sodass zwei Dichtungseinrichtungen an dem Drehflügel anordbar sind. Das zweite Dichtungsaufnahmeelement weist bevorzugt eine dritte Verbindungsschnittstelle auf, welche bevorzugt analog zur ersten Verbindungsschnittstelle ausgebildet ist und auf analoge Weise mit einer vierten Verbindungsschnittstelle des Drehflügelhauptkörpers, welche im Wesentlichen analog zur zweiten Verbindungsschnittstelle des Drehflügelhauptkörpers ausgebildet ist, lösbar verbindbar ist.

Bevorzugt ist die formschlüssige Verbindung, insbesondere die Schwalbenschwanzverbindung, der jeweiligen Verbindungsschnittstellen derart ausgestaltet, dass das oder die Dichtungsaufnahmeelement(e) in einer Bewegung parallel zur Außenseite des Drehflügels, also im Wesentlichen nach oben in Bezug auf die im Schiff installierte Drehflügelrudermaschine, von dem Drehflügel entfernt oder wieder eingesetzt werden kann.

Bevorzugt weist das Dichtungsaufnahmeelement einen Aufnahmeabschnitt auf, an welchem das erste Dichtungselement umlaufend anordbar ist, sowie eine Halteeinrichtung, welche lösbar an dem Aufnahmeabschnitt befestigbar ist, derart, dass das erste Dichtungselement mittels der Halteeinrichtung an dem Aufnahmeabschnitt befestigt ist.

Der Aufnahmeabschnitt ist bevorzugt an einer der ersten Verbindungsschnittstelle des Dichtungsaufnahmeelements abgewandten Seite des Dichtungsaufnahmeelements angeordnet. Der Aufnahmeabschnitt ist insbesondere ein von dem Dichtungsaufnahmeelement hervorstehender Abschnitt, dessen Querschnittsform bezogen auf eine Ebene parallel zum Drehflügel im Wesentlichen der Form des rahmenförmigen ersten Dichtungselements entspricht, sodass das Dichtungselement umlaufend um den Aufnahmeabschnitt angeordnet werden kann. Dazu ist ein äußerer Umfang des Aufnahmeabschnitts insbesondere geringfügig kleiner als ein Innenumfang des rahmenförmigen Dichtungselements, sodass das Dichtungselement auf bzw. um den Aufnahmeabschnitt eingesetzt werden kann. Der äußere Umfang ist insbesondere größer als der Innenumfang derart, dass ein Spalt zwischen dem Aufnahmeabschnitt und dem Dichtungselement gebildet wird, wobei der Spalt eine Breite zwischen 1/15 mm und einem 1/5 mm beträgt. Beispielsweise beträgt die Breite des Spalts 1/10 mm. Die Breite des Spalts kann sich insbesondere im Zuge einer Materialausdehnung durch eine Erwärmung des Materials verkleinern.

Die Halteeinrichtung dient insbesondere dazu, das an dem Aufnahmeabschnitt angeordnete Dichtungselement zu befestigen bzw. positionsfest anzuordnen. Dazu wird die Halteeinrichtung auf das Dichtungselement aufgesetzt, sodass das Dichtungselement zwischen einem Grundkörper des Dichtungsaufnahmeelements, von dem aus sich die erste Verbindungsschnittstelle und der Aufnahmeabschnitt erstrecken, und der Halteeinrichtung angeordnet und somit an dem Aufnahmeabschnitt befestigt ist.

Die Halteeinrichtung ist zur Befestigung an dem Aufnahmeabschnitt in eine an dem Aufnahmeabschnitt angeordneten, insbesondere umlaufenden, Nut einsetzbar. Die Nut ist entlang des äußeren Umfangs bzw. in einer äußeren Umfangsfläche des hervorstehenden Aufnahmeabschnitts angeordnet. Die Halteeinrichtung ist insbesondere durch die Anordnung in der Nut an dem Aufnahmeabschnitt befestigt.

Die Halteeinrichtung ist bevorzugt rahmenförmig ausgebildet, wobei ein innerer Umfang der Halteeinrichtung im Wesentlichen einem Umfang der Nut gemessen am tiefsten Punkt der Nut entspricht, sodass die Halteeinrichtung in die Nut einsetzbar ist.

Der innere Umfang der Halteeinrichtung ist insbesondere kleiner als ein Außenumfang des Aufnahmeabschnitts, sodass die Halteeinrichtung in dem Aufnahmeabschnitt fixiert ist, wenn die Halteeinrichtung in der Nut angeordnet ist.

Bevorzugt ist die Halteeinrichtung rahmenartig ausgebildet mit einem ersten Halteteil und einem zweiten Halteteil, wobei bevorzugt die beiden Halteteile separat voneinander an den Aufnahmeabschnitt anordbar sind, bevorzugt durch Einschieben der Halteteile in die Nut, wobei bevorzugt die Halteteile formschlüssig miteinander verbindbar sind. Insbesondere bilden die beiden Halteteile Hälften der rahmenförmigen Halteeinrichtung.

Insbesondere weist die Halteeinrichtung zwei Langseiten und zwei Kurzseiten auf. Die beiden Haltekörper sind gebildet durch eine gedachte Durchbrechung der Halteeinrichtung an dessen Langseiten. Entsprechend sind zwei Verbindungsstellen zwischen dem ersten und dem zweiten Halteteil an den Langseiten der Halteeinrichtung angeordnet. Alternativ wäre es auch denkbar, dass die Verbindungsstellen an den Kurzseiten der Halteeinrichtung angeordnet sind.

Bevorzugt sind die Halteteile formschlüssig miteinander verbindbar, wobei das erste Halteteil eine erste Verbindungsstruktur aufweist, welche zum Eingriff mit einer komplementär zur ersten Verbindungstruktur ausgebildeten zweiten Verbindungsstruktur ausgebildet ist, wobei bevorzugt die Verbindungsstrukturen jeweils schräg verlaufende Führungsflächen aufweisen und jeweils eine Stufe umfassen, welche zum Eingriff miteinander ausgebildet sind. Zum Verbinden der beiden Halteteile werden die beiden Führungsflächen der Halteteile einander berührend aneinander vorbeigeschoben bis die beiden komplementären Stufen der beiden Verbindungsstrukturen ineinandergreifen, sodass die beiden Verbindungstrukturen bzw. die beiden Halteteile miteinander verrastet sind.

Im eingebauten Zustand liegt die Halteeinrichtung bevorzugt unmittelbar auf dem Dichtungselement auf bzw. an diesem an bzw. es befindet sich ein kleiner Spalt zwischen der Halteeinrichtung und dem Dichtungselement. Insbesondere sind beide Komponenten rahmenartig ausgebildet, sodass die beiden Komponenten im Wesentlichen deckungsgleich aufeinanderliegen oder das Dichtungselement steht entlang des Umfangs in einer Draufsicht auf eine von dem Dichtungselement ausgespannten Ebene betrachtet über der Halteeinrichtung hervor, sodass die Hydraulikflüssigkeit zur Druckbeaufschlagung das Dichtungselement erreichen kann. Insbesondere steht das Dichtungselement dazu derart über der Halteeinrichtung hervor, dass die wenigstens eine oder die zwei umlaufenden Ausnehmungen nicht von der Halteeinrichtung abgedeckt sind. Wenn es zu einer Druckbeaufschlagung des Dichtungselements mittels der Hydraulikflüssigkeit kommt, werden insbesondere Eckbereiche des Dichtungselements gegen Eckbereiche der Halteeinrichtung gedrückt. Da die Eckbereiche der Halteeinrichtung frei zu den Hydraulikräumen liegen, kann es zu einem Umbiegen der Eckbereiche der Halteeinrichtung in Richtung der Hydraulikräume kommen.

Um dies zu verhindern, weist die Halteeinrichtung bevorzugt wenigstens eine oder mehrere Ausgleichsöffnung bzw. Ausgleichöffnungen auf, welche sich durch die Halteeinrichtung erstreckt und im eingebauten Zustand der Dichtungseinrichtung einen Bereich zwischen dem Dichtungselement und dem Halteelement einerseits und den Hydraulikraum andererseits fluidisch miteinander verbindet. Dadurch kann vorteilhaft verhindert werden, dass es zu einem übermäßigen Druckaufbau zwischen dem Dichtungselement und der Halteeinrichtung kommt, sodass ein Umbiegen der Eckbereiche der Halteeinrichtung verhindert wird. Die Ausgleichsöffnung ist dabei insbesondere derart dimensioniert, dass ein Druckausgleich erfolgen kann, während weiterhin ein ausreichender Anpressdruck auf das Dichtungselement ausgeübt wird. Insbesondere ist die Ausgleichsöffnung in einem der Eckbereiche der Halteeinrichtung angeordnet. Bevorzugt ist in jedem der Eckbereiche je eine Ausgleichsöffnung vorgesehen.

Bevorzugt ist die Ausgleichsöffnung oberhalb einer der umlaufenden Ausnehmungen des Dichtungselements angeordnet. Bevorzugt kann jedem der beiden Ausnehmungen eine oder mehrere Ausgleichöffnungen zugeordnet sein.

Die erfindungsgemäße Aufgabe wird ferner gelöst durch ein Verfahren zum Montieren einer Drehflügelrudermaschine mit den zuvor genannten Merkmalen, umfassend die folgenden Schritte:
- Anordnen der Dichtungseinrichtung, insbesondere eines ersten Dichtungselements und des zweiten Dichtungselements, an dem Dichtungsaufnahmeelement, und, insbesondere anschließendes,
- Einsetzen der Anordnung umfassend das Dichtungsaufnahmeelement und die Dichtungseinrichtung in die Drehflügelrudermaschine und insbesondere Befestigen der Anordnung an einem Drehflügelhauptkörper des Drehflügels.

Nachfolgend wird die Erfindung anhand von Ausführungsbeispielen näher erläutert. Es zeigen in schematischer Darstellung
- Fig. 1: eine schematische Darstellung des Aufbaus einer Drehflügelrudermaschine,
- Fig. 2: eine Draufsicht auf eine erfindungsgemäße Rudermaschine ohne Abdeckung,
- Fig. 3: eine Detailansicht einer feststehenden Trennwand der Drehflügelrudermaschine mit erfindungsgemäßen Dichtungseinrichtungen,
- Fig. 4: eine Querschnittsansicht einer Dichtungseinrichtung gemäß einer ersten Ausführungsform,
- Fig. 5: eine seitliche Draufsicht auf eine Dichtungseinrichtung gemäß der ersten Ausführungsform,
- Fig. 6: eine Querschnittsansicht der feststehenden Trennwand der Drehflügelrudermaschine,
- Fig. 7: eine Draufsicht auf ein erstes Dichtungselement einer Dichtungseinrichtung gemäß einer zweiten Ausführungsform,
- Fig. 8a): eine Rückansicht auf das erste Dichtungselement der Dichtungseinrichtung gemäß der zweiten Ausführungsform,
- Fig. 8b): eine Schnittansicht entlang der Schnittlinie A-A aus Figur 8a),
- Fig. 8c): eine Schnittansicht entlang der Schnittlinie A-A aus Figur 8a) gemäß einer alternativen Ausführungsform,
- Fig. 9: eine Draufsicht auf ein Dichtungsaufnahmeelement gemäß einer zweiten Ausführungsform,
- Fig. 10: eine Rückansicht auf das Dichtungsaufnahmeelement gemäß der zweiten Ausführungsform,
- Fig. 11: eine Draufsicht auf eine Halteeinrichtung,
- Fig. 12: eine Draufsicht auf das Dichtungsaufnahmeelement gemäß der zweiten Ausführungsform mit dem Dichtungselement gemäß der zweiten Ausführungsform,
- Fig. 13a): eine Draufsicht auf das Dichtungsaufnahmeelement gemäß der zweiten Ausführungsform mit dem Dichtungselement und der Halteeinrichtung gemäß der zweiten Ausführungsform,
- Fig. 13b): eine Schnittansicht entlang der Schnittlinie B-B aus Figur 13a),

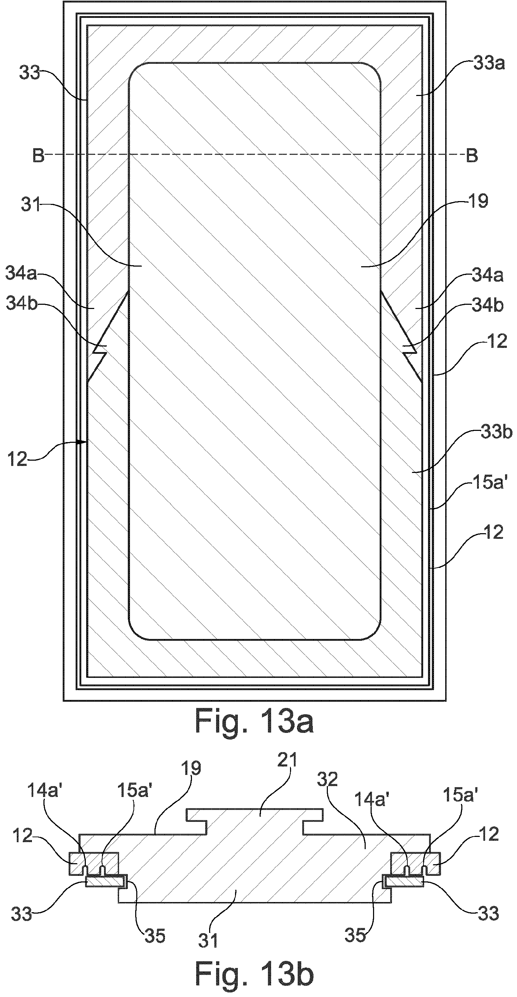

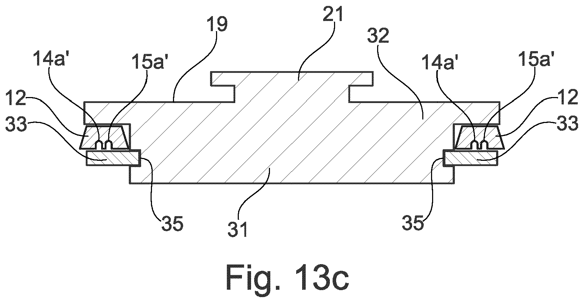

- Fig. 13 c): eine Schnittansicht entlang der Schnittlinie B-B aus Figur 13a) gemäß einer alternativen Ausführungsform,

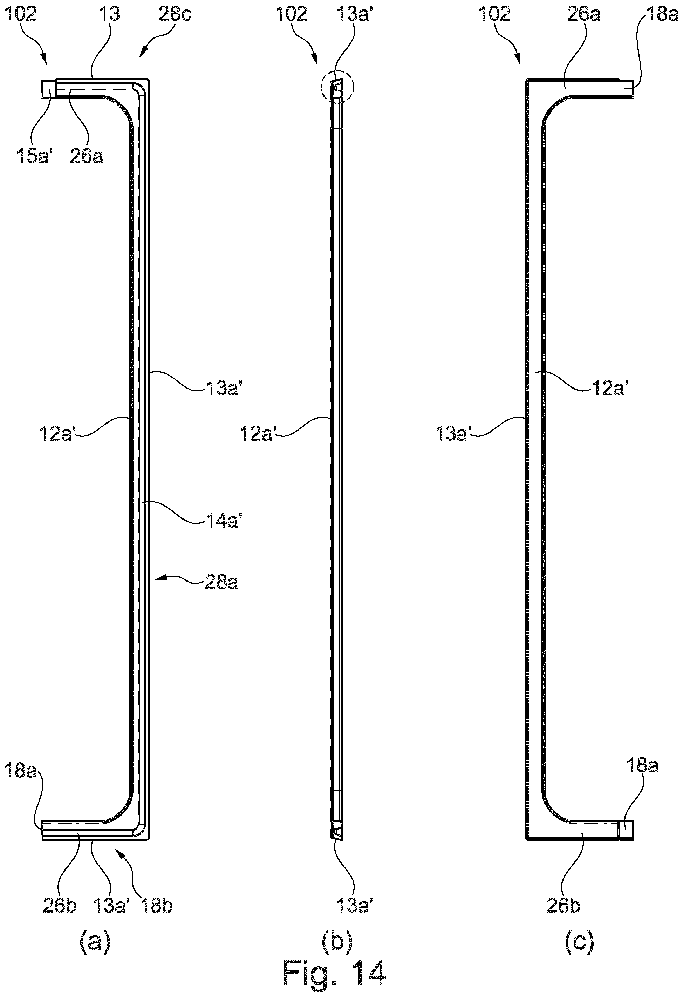

- Fig. 14a)-c): verschiedene Ansichten eines ersten Dichtelements einer Dichtungseinrichtung gemäß einer dritten Ausführungsform,

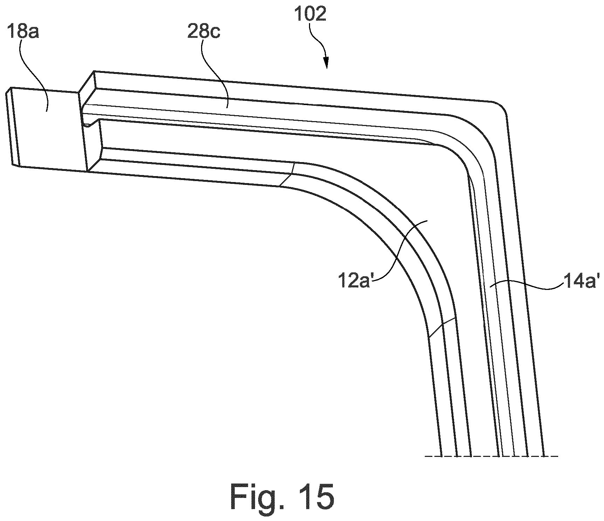

- Fig. 15: eine Detailansicht des ersten Dichtelements einer Dichtungseinrichtung gemäß einer zweiten Ausführungsform,

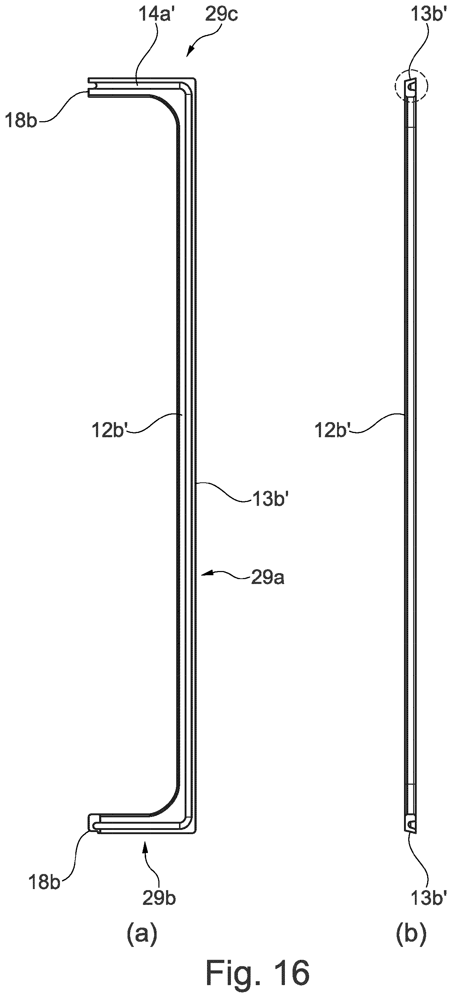

- Fig. 16a)-b): verschiedene Ansichten eines zweiten Dichtelements einer Dichtungseinrichtung gemäß der dritten Ausführungsform,

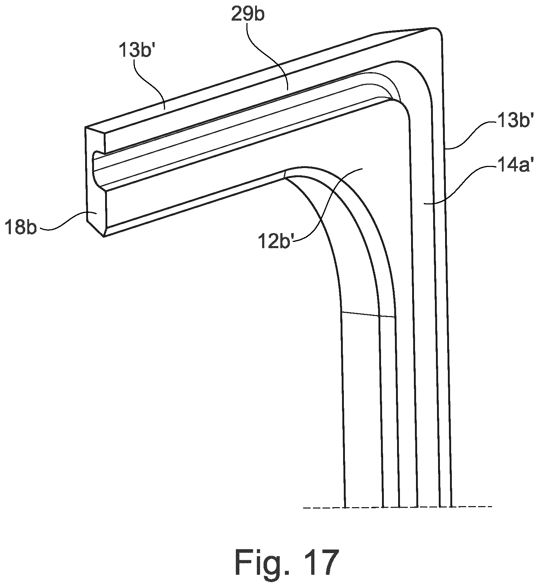

- Fig. 17: eine Detailansicht des zweiten Dichtelements der Dichtungseinrichtung gemäß der dritten Ausführungsform,

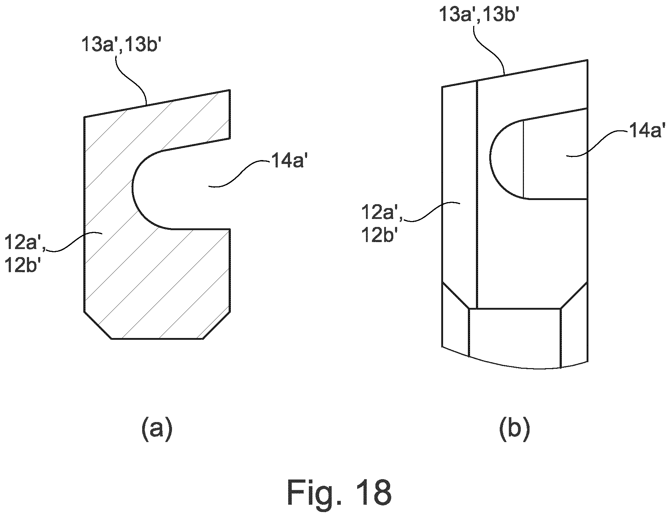

- Fig. 18a)-b): eine Querschnittsansicht und eine Detailansicht eines Dichtelements gemäß der dritten Ausführungsform,

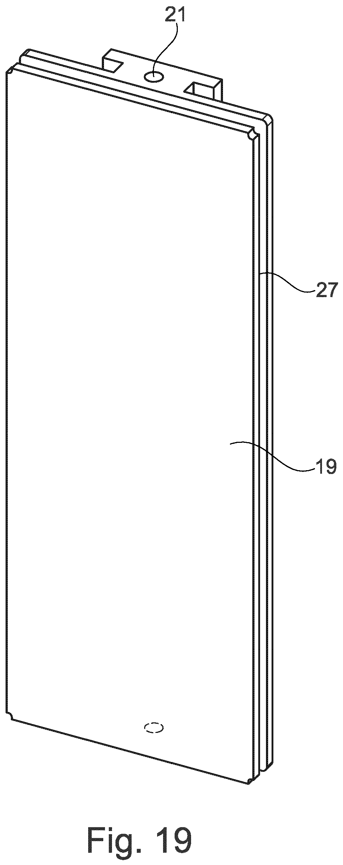

- Fig. 19: eine perspektivische Ansicht eines Dichtungsaufnahmeelements,

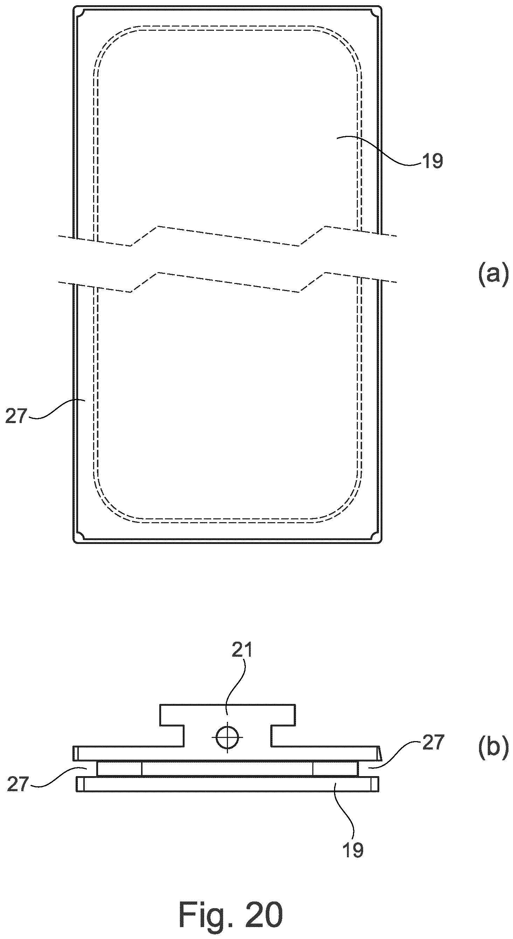

- Fig. 20a)-b): verschiedene Ansichten des Dichtungsaufnahmeelements,

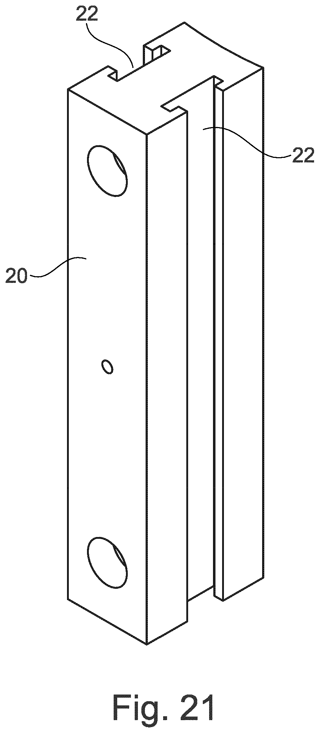

- Fig. 21: eine perspektivische Ansicht eines Drehflügelhaupts, und

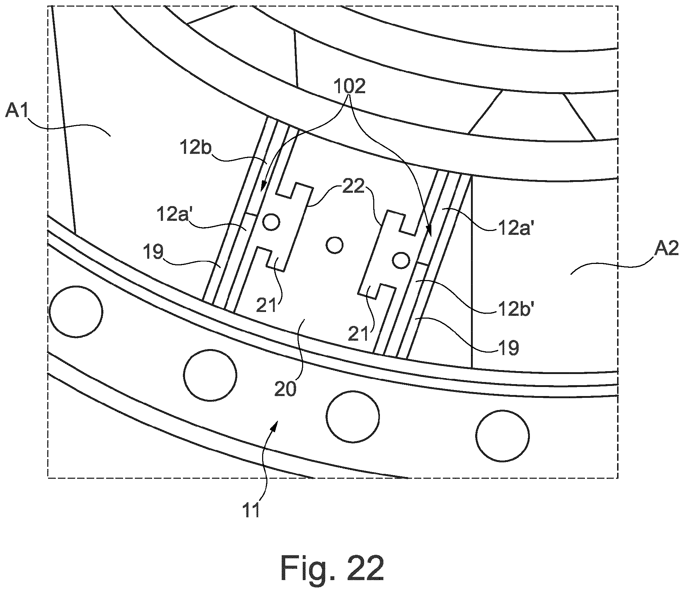

- Fig. 22: eine perspektivische Detailansicht einer eingebauten feststehenden Trennwand mit Dichtungseinrichtungen gemäß der dritten Ausführungsform.

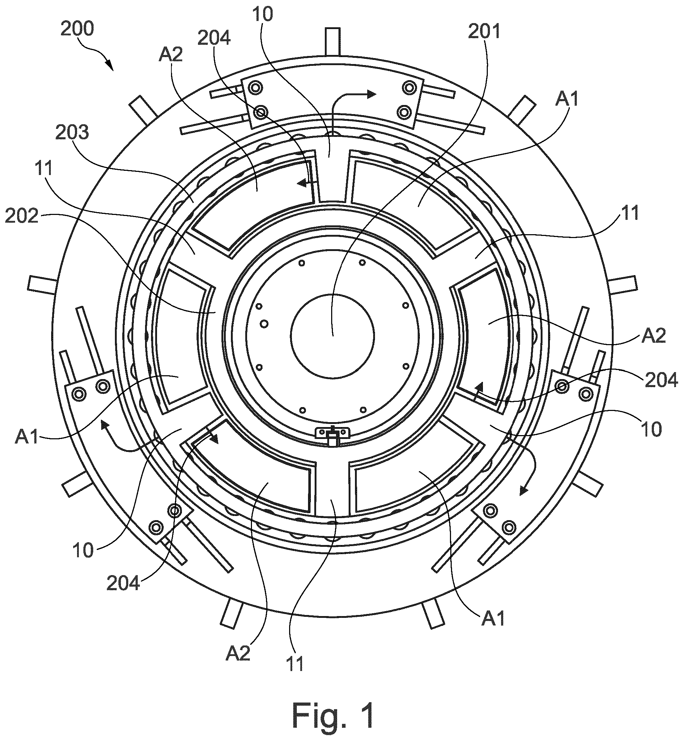

Figur 1 zeigt eine schematische Darstellung des prinzipiellen Aufbaus einer Drehflügelrudermaschine 200. Die Drehflügelrudermaschine 200 umfasst einen Stator 203 mit einer Innenwand, an welcher drei feststehende Trennwände 10 angeordnet sind. Ferner umfasst die Drehflügelrudermaschine einen mit einem Ruderschaft 201 verbundenen Rotor 202 mit einer Außenwand, an der drei Drehflügel 11 angeordnet sind. Dabei sind die Trennwände 10 und die Drehflügel 11 derart angeordnet, dass jeweils zwischen den Trennwänden 10 und den Drehflügeln 11 Räume A1, A2 ausgebildet sind. Diese Räume A1, A2 stellen Hydraulikräume dar, welche über Zuführeinrichtungen 204 für Hydraulikflüssigkeit mit der Hydraulikflüssigkeit gefüllt bzw. geleert, das bedeutet mit einer Hydraulikkraft beaufschlagt bzw. entspannt, werden können.

Um den Rotor 202 mit dem Ruderschaft 201 zu rotieren, wird in jeweils einen der beiden zu einem Drehflügel 11 benachbarten Räume A1 die Hydraulikflüssigkeit über Zuführeinrichtungen 204 mit einem Druck beaufschlagt, sodass der Drehflügel 11 infolge der Druckbeaufschlagung bewegt bzw. rotiert wird. Zur Rotation in die entgegengesetzte Richtung werden entsprechend die jeweils anderen Räume A2 auf der anderen Seite des Drehflügels 11 mit dem Druck beaufschlagt.

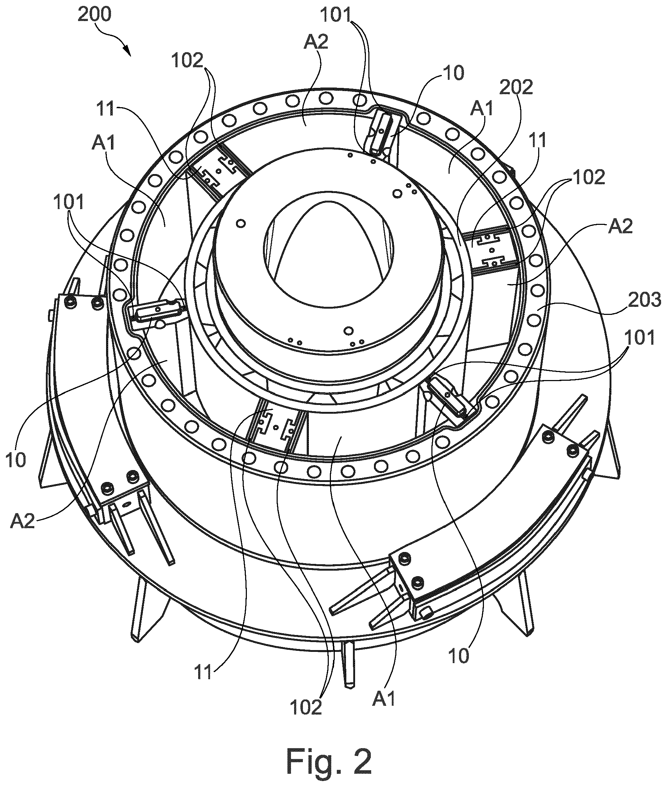

In Figur 2 ist eine Drehflügelrudermaschine 200 mit mehreren erfindungsgemäßen Dichtungseinrichtungen 101, 102 dargestellt. Die Dichtungseinrichtungen 101, 102 dienen zur Abdichtung der Räume A1, A2 im Bereich der Trennwände 10 und der Drehflügel 11. Dabei sind an den Drehflügeln außenliegend und innenliegend jeweils eine Dichtungseinrichtung 102 gemäß einer zweiten Ausführungsform angeordnet. Die feststehenden Trennwände weisen jeweils zwei Dichtungseinrichtungen 101 gemäß einer ersten Ausführungsform auf, welche jeweils an je einer der Räume A1, A2 zugewandten Seiten der Trennwand 10 angeordnet sind.

Die Dichtungseinrichtungen 101, 102 dichten die Trennwände 10 und die Drehflügel 11 gegen die vom Rotor 202 und Stator 203 gebildeten Innenwände der Räume A1, A2 ab, sodass im Betrieb der Drehflügelrudermaschine 200 Leckagen von Hydraulikflüssigkeit verhindert bzw. minimiert wird.

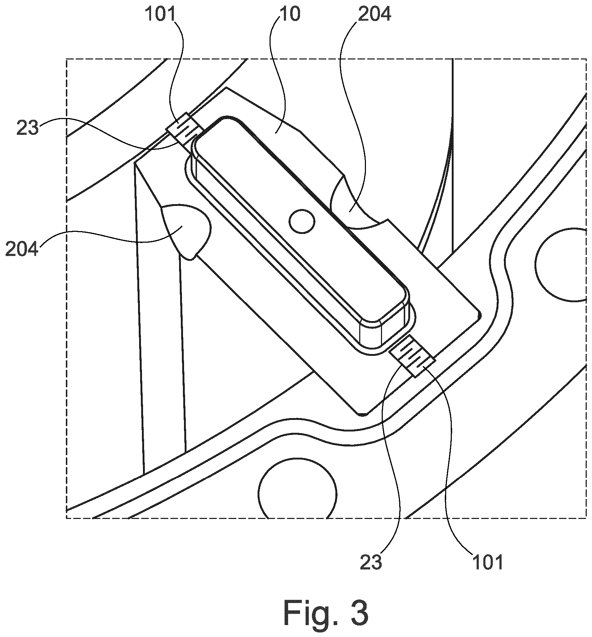

Figur 3 zeigt eine Detailansicht einer Trennwand 10 mit zwei eingesetzten Dichtungseinrichtungen 101 gemäß der ersten Ausführungsform. Die Form der Dichtungseinrichtung 101 wird anhand der nachfolgenden Figuren näher beschrieben. Die Trennwand weist an den beiden Kontaktflächen mit dem Rotor 202 und dem Stator 203 jeweils eine Trennwandnut 23 auf, in welche je eine Dichtungseinrichtung 101 eingesetzt ist. Die Dichtungseinrichtung 101 umfasst ein erstes Dichtungselement 12, welcher Polyoxymethylen-Homopolymer, oder Polyoxymethlyen Copolymer oder Mischungen hieraus umfasst oder aus den vorgenannten Materialen besteht und entsprechend starr ausgeführt ist. Dadurch ist es vorteilhaft möglich, die Dichtungseinrichtung 101 nach dem Installieren der Trennwand 10 in die Drehflügelrudermaschine 200 einzusetzen, indem die Dichtungseinrichtung 101 von oben in die Trennwandnut 23 eingeschoben wird. Dies ist besonders vorteilhaft im Falle einer Wartung, wenn ein Wechsel der Dichtungseinrichtung 101 notwendig ist, da dann kein Ausbau der Trennwand 10 erfolgen muss.

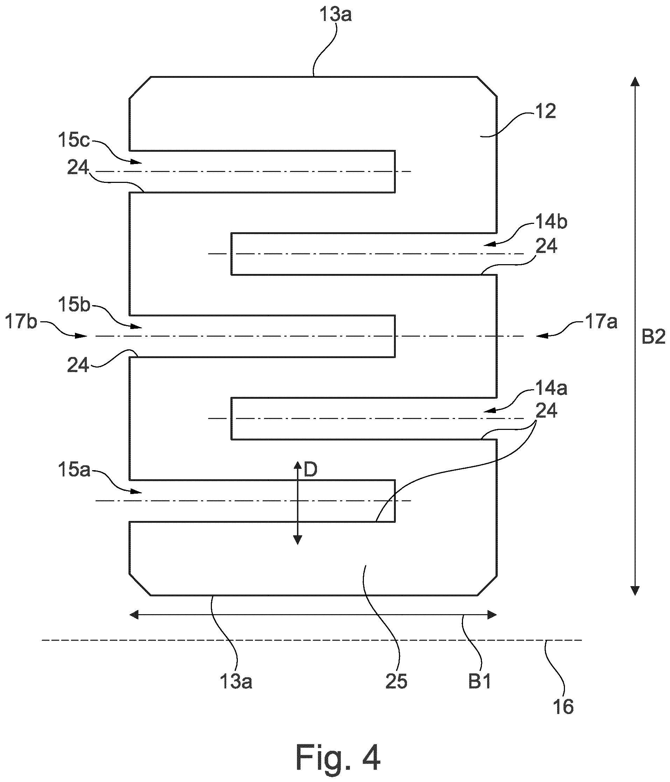

Figur 4 zeigt eine Querschnittsdarstellung durch die Dichtungseinrichtung 101 gemäß der ersten Ausführungsform. Zu erkennen ist die Mäanderform der Dichtungseinrichtung 101, welche gebildet wird durch mehrere Ausnehmungen 14, 14b, 14c, 15a, 15b. Eine erste Ausnehmungsgruppe 17a umfasst eine erste Ausnehmung 14a und eine weitere Ausnehmung 14b. Diese Ausnehmungen 14a, 14b können fluidisch mit dem Raum A1 verbunden werden, sodass druckbeaufschlagtes Fluid in die Ausnehmungen gelangen kann und einen Druck D von Druckbeaufschlagungsflächen 24 in Richtung einer ersten Dichtfläche 13a aufbringen kann, sodass eine Anpressung des ersten Dichtungselements 12 im Bereich der ersten Dichtfläche 13a an eine Gegenfläche 16 erfolgen kann. Zu dem Druck D bzw. der damit verbundenen Kraft wird eine entsprechende Gegenkraft bzw. ein Gegendruck aufgebracht, wie durch den Doppelpfeil angedeutet. Die Gegenfläche ist insbesondere eine Wandung des Rotors 202 bzw. des Stators 203.

Zur Bildung der Mäanderform sind ferner wenigstens eine zweite Ausnehmung 15a vorgesehen, welche zu einer zweiten Ausnehmungsgruppe 17b mit den weiteren Ausnehmungen 15b, 15c gehört. Diese Ausnehmungen 15a, 15b, 15c können fluidisch mit dem Raum A2 verbunden werden, sodass druckbeaufschlagtes Fluid in die Ausnehmungen gelangen kann und einen Druck D von Druckbeaufschlagungsflächen 24 in Richtung einer ersten Dichtfläche 13a aufbringen kann, sodass eine Anpressung des ersten Dichtungselements 12 im Bereich der ersten Dichtfläche 13a an eine Gegenfläche 16 erfolgen kann, wodurch eine entsprechende Gegenkraft ausgehend von der ersten Dichtfläche 13a in Richtung der Druckbeaufschlagungsflächen 24 generiert wird.

In dem in Figur 4 gezeigten Ausführungsbeispiel umfasst die erste Ausnehmungsgruppe zwei Ausnehmungen und die zweite Ausnehmungsgruppe drei Ausnehmungen. Diese Zahlen können jedoch auch variieren. Insbesondere können die Ausnehmungsgruppen die gleiche Anzahl an Ausnehmungen aufweisen.

Die Dichtfläche 13a weist eine Breite B1 auf und die Ausnehmungen 14a, 14b, 15a, 15b, 15c sind jeweils als schlitzförmige Vertiefung ausgeführt, derart, dass die Druckbeaufschlagungsflächen 24 der einzelnen Ausnehmungen 14a, 14b, 15a, 15b, 15c im Wesentlichen parallel zur Dichtfläche 13a und in einer Richtung entlang einer Breite B2 des ersten Dichtungselements 12 betrachtet übereinander angeordnet sind. Dadurch wird eine besonders effektive Anpressung der ersten Dichtfläche 13a an die Gegenfläche 16 sowie die Aufbringung einer entsprechenden Gegenkraft erreicht.

Ferner erstrecken sich die einzelnen Ausnehmungen 14a, 14b, 15a, 15b, 15c jeweils über wenigstens 50% der Breite B1 der Dichtfläche 13a. Dadurch kann sich das erste Dichtungselement 12 im Bereich der ersten Dichtfläche 13a an eine konvex oder konkav gestaltete Gegenfläche 16 anschmiegen und es wird verhindert, dass Hydraulikflüssigkeit, welche an den Randbereichen der Dichtfläche 13a zwischen Dichtfläche 13a und Gegenfläche 16 gelangt, wieder zurück in den jeweiligen Raum A1, A2 gedrückt wird. Die Dichtfläche 13a ist Bestandteil eines Wandabschnitts 25, welcher an die Ausnehmung 14a angrenzt bzw. einen Teil der Innenwandung der Ausnehmung 14a bildet. Durch die Vorsehung eines im Verhältnis zu einer Gesamtbreite des B2 des Dichtungselements 12 relativ dünnen Wandabschnitts 25 kann eine effektive Anpressung erreicht werden.

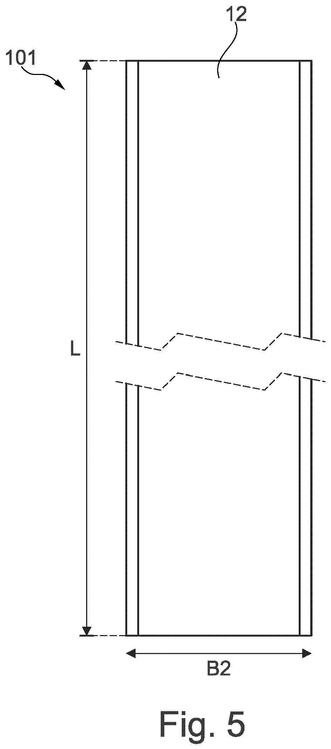

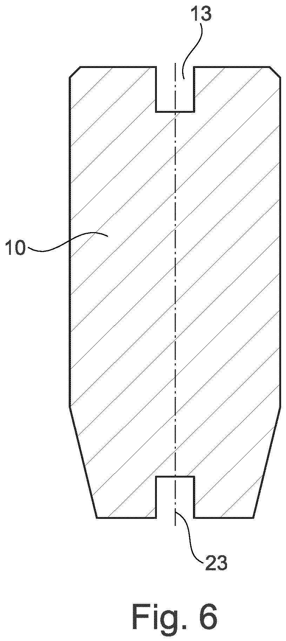

Figur 5 zeigt eine Seitenansicht auf die Dichtungseinrichtung 101. Es ist zu erkennen, dass das erste Dichtungselement 12 eine längliche Form mit einer Länge L aufweist, sodass die Dichtungseinrichtung 101 in die Trennwandnut 23 geschoben werden kann. Eine Querschnittsdarstellung der Trennwand 10 mit den beiden an gegenüberliegenden Seiten angeordneten Trennwandnuten 23 ist in Figur 6 gezeigt.

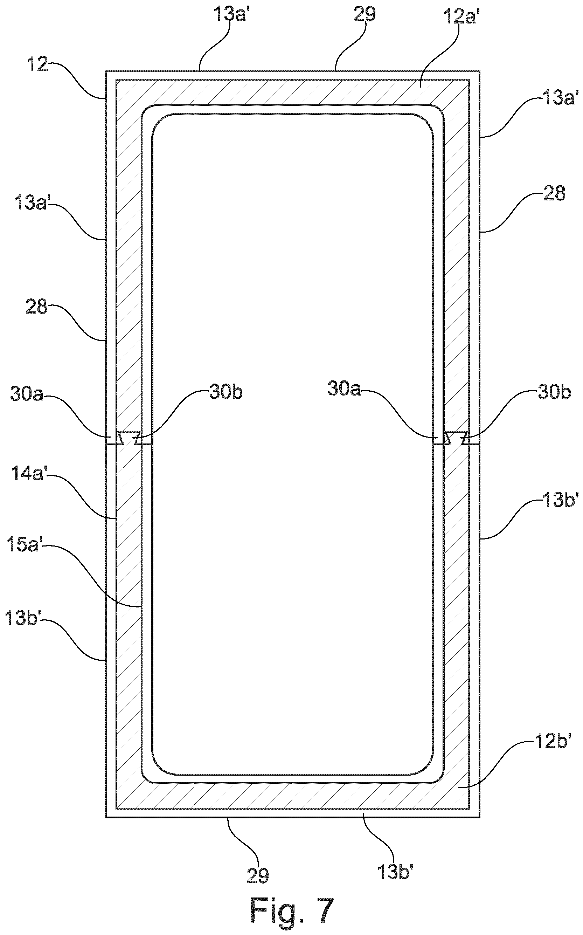

Figur 7 zeigt die Dichtungseinrichtung 102 gemäß einer zweiten Ausführungsform mit einem Dichtungselement 12' in einer Draufsicht. Das Dichtungselement 12' ist rahmenförmig ausgebildet mit zwei Kurzseiten 29 und zwei Langseiten 28. Das Dichtungselement 12' ist zweiteilig aufgebaut mit einem ersten Dichtungselementteil 12a' und einem zweiten Dichtungselementteil 12b'. Die beiden Dichtungselementteile 12a', 12b' weisen jeweils Verbindungsstrukturen 30a, 30b auf, welche zusammen an den Langseiten 28 des Dichtungselements 12' eine Schwalbenschwanzverbindung bilden. Ferner weist das Dichtungselement zwei Ausnehmungen 14a', 15a' auf, welche im eingebauten Zustand des Dichtungselements 12' fluidisch mit den Räumen A1, A2 verbunden sind, um mit dem Hydraulikdruck beaufschlagt zu werden für eine verbesserte Anpressung der Dichtungsflächen 13a', 13b'.

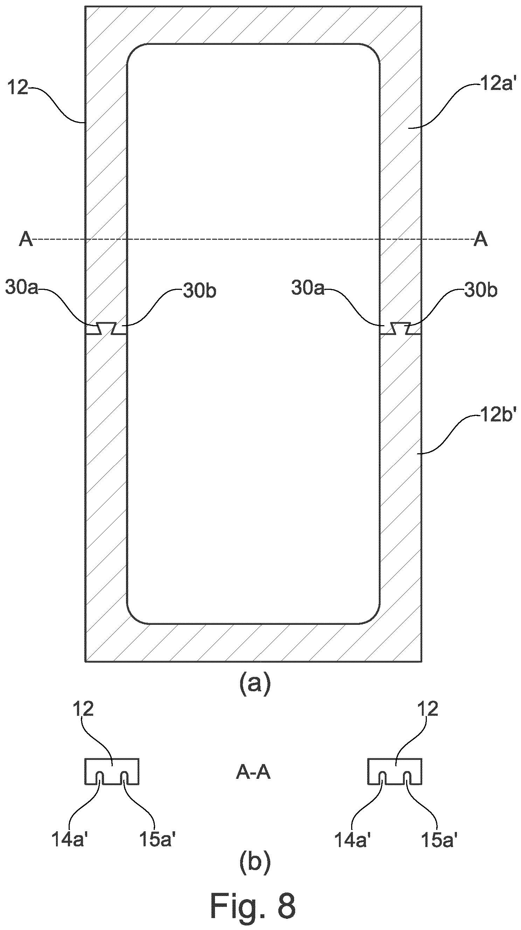

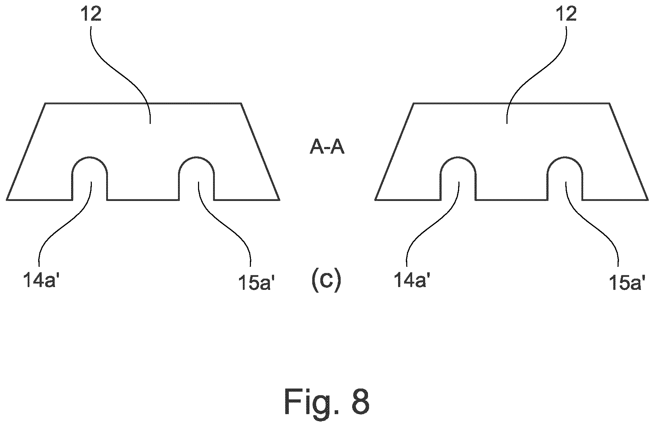

Figur 8a) zeigt eine Rückansicht auf das Dichtungselement 12' mit den Verbindungsstrukturen 30a, 30b auf, welche zusammen an den Langseiten 28 des Dichtungselements 12 die Schwalbenschwanzverbindung zwischen den Dichtungselementteilen 12a', 12b' bilden. Figur 8b) zeigt eine Querschnittsansicht entlang der Linie A-A aus Figur 8a). In der Querschnittsansicht sind die beiden benachbarten, umlaufenden Ausnehmungen 14a', 15a' dargestellt. Figur 8c) zeigt eine alternative Querschnittsform des Dichtungselements 12' bzw. der Dichtungselementteile 12a', 12b'. Die Dichtungselementteile 12a', 12b' weisen im Unterschied zu Figur 8b) entlang des inneren und des äußeren Umfangs schräge innere und äußere Dichtflächen auf.

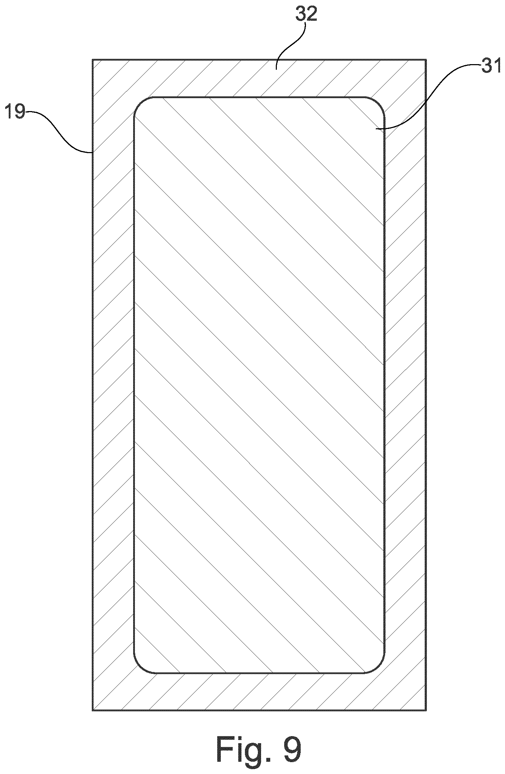

Figur 9 zeigt eine Draufsicht auf ein Dichtungsaufnahmeelement 19, mittels welchem die Dichtungseinrichtung 101 an einem nicht dargestellten Drehflügel befestigt werden kann. Das Dichtungsaufnahmeelement 19 umfasst einen Grundkörper 32 und ein von dem Grundkörper aus der Bildebene hervorstehenden Aufnahmeabschnitt 31, an welchem das Dichtungselement 12' zusammen mit einer nachfolgend noch beschriebenen Halteeinrichtung, welche hier nicht dargestellt sind, befestigt werden können.

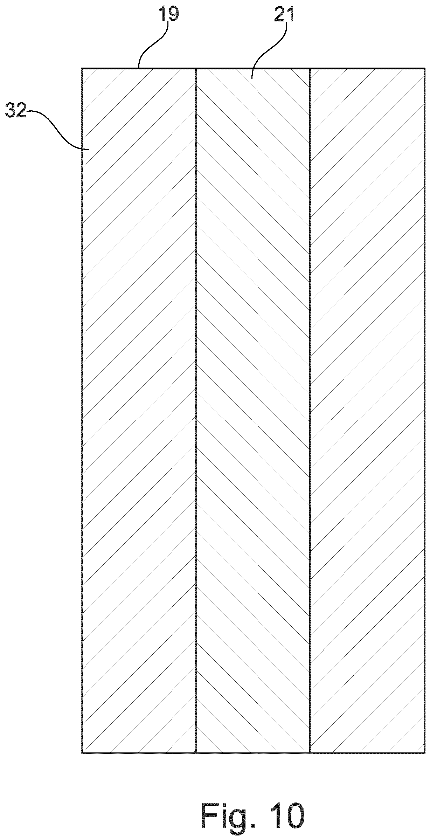

Figur 10 zeigt eine Rückansicht des Dichtungsaufnahmeelements 19. Dargestellt ist, dass auf einer Rückseite des Grundkörpers 19 eine erste Verbindungsschnittstelle 19 angeordnet ist, welche aus der Bildebene hervorsteht. Die erste Verbindungsschnittstelle 21 ist zum Verbinden mit einer zweiten Verbindungsschnittstelle 22 des Drehflügels 20, welche in Figur 21 gezeigt ist, ausgebildet.

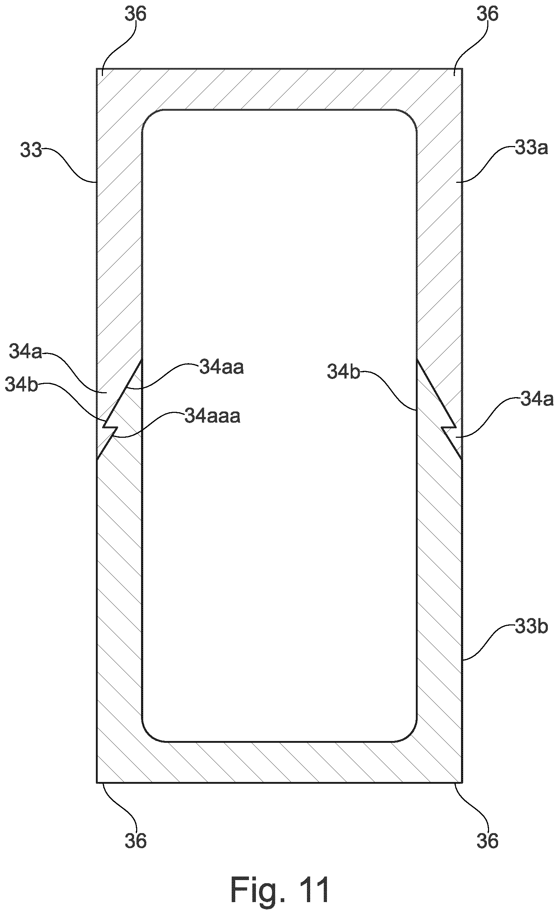

Figur 11 zeigt die Halteeinrichtung 33, welche rahmenförmig ausgebildet ist und zweiteilig aufgebaut ist mit einem ersten Halteelement 33a und einem zweiten Halteelement 33b. Die Halteelemente 33a, 33b weisen jeweils Verbindungstrukturen 34a, 34b auf, mittels welchen die beiden Halteelemente 33a, 33b formschlüssig miteinander verbunden werden können. Wie beispielhaft für eine der Verbindungsstrukturen 34a gezeigt, weist jede der Verbindungsstrukturen 34a, 34b eine Führungsfläche 34aa und eine Stufe 34aaa auf, welche jeweils zum Eingriff mit einer Führungsfläche und Stufe des gegenüberliegenden Halteelements 33a, 33b ausgebildet sind. Ferner weist die Halteeinrichtung 33 in jedem der Eckbereiche eine Ausgleichsöffnung 36 auf.

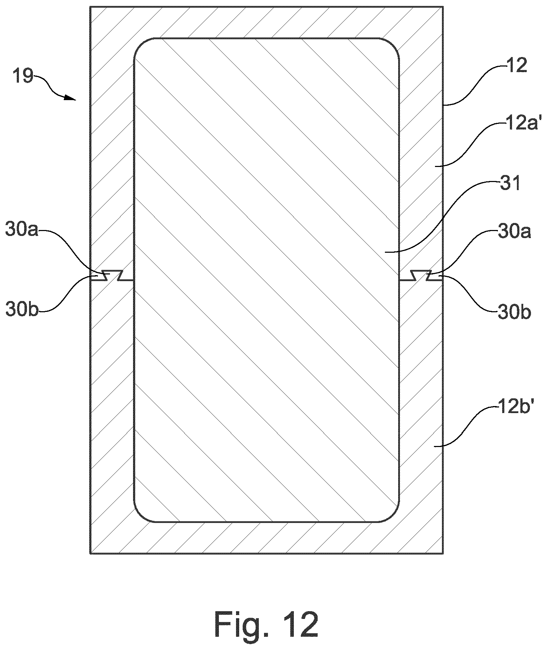

Figur 12 zeigt eine Draufsicht auf das Dichtungsaufnahmeelement 19, an welchem das Dichtungselement 12' angeordnet ist. Das Dichtungselement 12' umgibt den Aufnahmeabschnitt 31 des Dichtungsaufnahmeelements 19 und liegt an dem Grundkörper 32 des Dichtungsaufnahmeelements 19 an, welcher hier aufgrund der Verdeckung durch das Dichtungselement 12' nicht zu erkennen ist.

Figur 13a) zeigt eine Draufsicht auf das Dichtungsaufnahmeelement 19 bzw. den Grundkörper 32 des Dichtungsaufnahmeelements 19, an welchem sowohl das Dichtungselement 12' als auch die Halteeinrichtung 33 angeordnet ist. Es ist insbesondere zu erkennen, dass das Dichtungselement 12' seitlich entlang des Umfangs von der Halteeinrichtung 33 hervorsteht und in diesem Bereich nicht von der Halteeinrichtung 33 verdeckt ist. Insbesondere ist zumindest die Ausnehmung 15a' nicht von der Halteeinrichtung 33 verdeckt. Zusätzlich könnte auch die zweite Ausnehmung 14a' ebenso wie die erste Ausnehmung nicht von der Halteeinrichtung 33 verdeckt sein, wie beispielsweise in Figur 13c gezeigt. Die Halteeinrichtung 33 befestigt das Dichtungselement 12' an der Dichtungsaufnahmeeinrichtung 19 bzw. dessen Aufnahmeabschnitt 31.

Zur Befestigung der Halteeinrichtung 33 ist diese in eine an dem Aufnahmeabschnitt entlang an dessen äußeren Umfang angeordnete Nut 35 eingesetzt bzw. eingeschoben. Dies ist in Figur 13b) dargestellt, welche eine Querschnittsansicht entlang des Schnitts B-B auf Figur 13a) zeigt. Figur 13b) zeigt ferner die Anordnung des Dichtungselements 12' zwischen dem Grundkörper 32 und der Halteeinrichtung 33 sowie die Ausnehmungen 14a', 15a' des Dichtungselements 12', welche der Halteeinrichtung 33 zugewandt sind. Zudem ist die erste Verbindungsschnittstelle 21 gezeigt, welche im Querschnitt im Wesentlichen T-förmig ausgebildet ist, sodass diese in eine komplementäre Aufnahmenut der zweiten Verbindungsschnittstelle 22 des Drehflügels 20 einschiebbar ist.

Figur 13c) zeigt eine alternative Ausführungsform, in der innere und äußere Umfangsflächen bzw. Dichtflächen des Dichtungselements 12' jeweils einen schrägen Verlauf aufweisen. Ferner ist analog zu Figur 13a) gezeigt, dass das Dichtungselement 12' entlang des äußeren Umfangs über die Halteeinrichtung 33 hervorsteht, sodass insbesondere die Ausnehmungen 14a', 15a' nicht von der Halteeinrichtung 33 verdeckt sind. Die schrägen Dichtflächen des Dichtungselements 12' können grundsätzlich auch bei der Ausführungsform gemäß Figur 13b) vorhanden sein.

In den Figuren 14a) bis 14c) sind verschiedene Ansichten eines ersten Dichtungselementteils 12a' dargestellt, welcher zusammen mit einem zweiten Dichtungselementteil 12b', welcher nachfolgend noch im Detail beschrieben wird, eine Dichtungseinrichtung 102 gemäß einer dritten Ausführungsform bildet.

Das erste Dichtungselementteil 12a' gemäß der dritten Ausführungsform weist eine einzige erste Ausnehmung 14a auf, welche mit einem der Räume A1, A2 fluidisch verbunden werden kann. Wie in Figuren 7a) und 7c) gezeigt, weist das Dichtungselementteil 12a' einen ersten Längsabschnitt 28a auf, welcher entlang der äußeren Längsseite des Drehflügels 11 anordbar ist. Endseitig sind zwei weitere, Seitenabschnitte 28b, 28c vorgesehen, welche entlang einer Hälfte einer Oberseite und einer Unterseite des Drehflügels 11 angeordnet werden können. Beim Zusammensetzen des ersten und des zweiten Dichtungselementteils wird so eine Dichtungseinrichtung 102 mit einer um die Seiten des Drehflügels 11 umlaufenden Dichtfläche 13a', 13b' geschaffen. In Figur 7b) ist gezeigt, dass die erste Dichtfläche 13a' einen schrägen Verlauf entlang der Breite B1 der Dichtfläche 13a' betrachtet aufweist.

Figur 15 zeigt eine Detailansicht des ersten Dichtungselementteils 12a' im Bereich des Seitenabschnitts 28c. Zu sehen ist eine Verbindungsstruktur 18a, mittels welcher eine Verbindung mit dem zweiten Dichtungselementteil 12b' möglich ist, welche eine entsprechend komplementäre Gegenstruktur aufweist. Die Verbindungsstruktur 18a weist die Form einer Stufe auf, welche mit einer komplementären Stufe des zweiten Dichtungselementteils 12b' formschlüssig zusammensetzbar ist. Der weitere Seitenabschnitt 28b weist eine analog ausgebildete Verbindungsstruktur 18a auf.

Ferner zu erkennen ist die erste Ausnehmung 14a' in dem Dichtungselementteil 12a', welche in einer Querschnittsbetrachtung im Wesentlichen eine U-Form aufweist. Eine Querschnittsansicht und eine Detailansicht der Ausnehmung 14a' sind in den Figuren 11a) und 11b) dargestellt. Auch hier ist die U-Form der Ausnehmung 14a' zu erkennen sowie der schräge Verlauf der Dichtfläche 13a'. Die in den Figuren 11a) und 11b) gezeigten Geometrien gelten in analoger Weise für den zweiten Dichtungselementteil 12b' und dessen zweite Dichtfläche 13b'.

In den Figuren 16a) und 16b) sind verschiedene Ansichten des zweiten Dichtungselementteils 12b' dargestellt, welcher zusammen mit einem ersten Dichtungselementteil 12a', welcher zuvor beschrieben wurde, eine Dichtungseinrichtung 102 gemäß der zweiten Ausführungsform bildet. Das zweite Dichtungselementteil 12b' entspricht im Wesentlichen dem ersten Dichtungselementteil 12a' mit dem Unterschied, dass das zweite Dichtungselementteil 12b' eine abweichende Verbindungsstruktur 18b aufweist, sodass diese mit der ersten Verbindungsstruktur 18a des ersten Dichtungselementteils 12a' zusammensetzbar ist.

Das zweite Dichtungselementteil 12b' weist analog zum ersten Dichtungselementteil 12a' einen Längsabschnitt 29a und zwei Seitenabschnitte 29b, 29c auf.

Die Verbindungsstruktur 18b ist in Figur 16a) zu erkennen an den Seitenabschnitten 29b, 29c. Die Verbindungsstruktur 18b umfasst jeweils Stufen, welche komplementär zu den Stufen der Verbindungsstruktur 18a ausgebildet sind. Eine Detailansicht einer komplementär ausgebildeten Verbindungsstruktur 18b an dem Seitenabschnitt 29b ist in Figur 17 dargestellt.

Figur 18 zeigt Querschnittsansichten durch die Dichtungselementteile 12a', 12b' mit der Ausnehmung 14a' und den Dichtflächen 13a', 13b'.

In Figur 19 ist ein Dichtungsaufnahmeelement 19 des Drehflügels 11 dargestellt. Das Dichtungsaufnahmeelement 19 stellt eine von dem Drehflügel 11 lösbare Komponente dar zur Aufnahme einer Dichtungseinrichtung 102 gemäß der zweiten Ausführungsform. Der Drehflügel 11 weist insbesondere zwei solcher Dichtungsaufnahmeelemente 19 auf, sodass zwei Dichtungseinrichtungen 102 an dem Drehflügel 11 angeordnet werden können. Die beiden Dichtungsaufnahmeelemente 19 eines Drehflügels 11 sind im Wesentlichen identisch ausgebildet und sind an zwei Seiten des Drehflügels 11, welche jeweils einem Raum A1, A2 zugeordnet sind, angeordnet. Das Dichtungsaufnahmeelement 19 weist eine Außenseite auf, welche im an dem Drehflügel eingebauten Zustand eine äußere Wandung des Drehflügels 11 bildet. Figur 13a) zeigt eine Ansicht auf die Außenseite des Dichtungsaufnahmeelements 19.

Das Dichtungsaufnahmeelement 19 weist zur Befestigung an dem Drehflügel 11 eine Verbindungsschnittstelle 21 auf. Die Verbindungsschnittstelle 21 ist als ein länglicher Vorsprung mit einem T-förmigen Querschnitt ausgebildet. Dies ist in Figur 13b) dargestellt.

In den Figuren 20a und 20b) ist ferner eine Aufnahmenut 27 des Dichtungsaufnahmeelements 19 dargestellt zur Aufnahme der Dichtungseinrichtung 102. Die Aufnahmenut 27 verläuft entlang eines Umfangs des Dichtungsaufnahmeelements 19 bzw. entlang deren äußeren Seiten. Das erste und das zweite Dichtungselementteil 12a', 12b' werden in die Aufnahmenut 27 eingesetzt, sodass sich die Verbindungsstrukturen 18a, b überlagern und die Dichtflächen 13a, b' eine im Wesentlichen geschlossene Dichtfläche umlaufend um die Seiten des Dichtungsaufnahmeelements 19 bilden. Wie insbesondere anhand der gestrichelten Linie in Figur 13a) zu erkennen ist, entspricht die Form der Aufnahmenut 27 im Wesentlichen der Form der Dichtungselementteile 12a, b'.

Figur 21 zeigt einen Drehflügelhauptkörper 20, welcher zur lösbaren Verbindung mit zwei Dichtungsaufnahmeelementen 19 ausgebildet ist. Der Drehflügelhauptkörper 20 bildet ein zentrales Element des Drehflügels 11, welcher insbesondere fest in der Drehflügelrudermaschine 200 installiert ist. Die Dichtungsaufnahmeelemente 19 werden an zwei Seiten des Drehflügelhauptkörpers 20 befestigt. Zur lösbaren Befestigung der Dichtungsaufnahmeelemente 19 weist der Drehflügelhauptkörper 20 zwei Verbindungsschnittstellen 22 auf. Die Verbindungsschnittstellen 22 sind als längliche Vertiefungen entlang einer Längsachse des Drehflügelhauptkörpers 20 ausgebildet. Die Vertiefungen weisen einen im Wesentlichen T-förmigen Querschnitt auf, sodass die Vertiefungen komplementär zu den länglichen Vorsprüngen der Verbindungsschnittstellen 21 der Dichtungsaufnahmeelemente 19 ausgebildet sind.

Diese Ausgestaltung der Verbindungsschnittstellen 21, 22 ermöglicht es, dass die Dichtungsaufnahmeelemente 19 durch Einschieben der T-förmigen Vorsprünge in die T-förmigen Vertiefungen an dem Drehflügelhauptkörper 20 lösbar befestigt werden. Dies ermöglicht es vorteilhaft, dass die Dichtungsaufnahmeelemente 19 zusammen mit den jeweiligen Dichtungseinrichtungen 102 an dem Drehflügelhauptkörper 20 befestigt und wieder gelöst werden können, wenn der Drehflügelhauptkörper 20 in der Drehflügelrudermaschine fest fixiert ist. Es ist somit kein vollständiger Ausbau des Drehflügels 11 notwendig, wenn eine Dichtungseinrichtung 102 getauscht werden muss.

Figur 22 zeigt eine Detailansicht eines Drehflügels 11 im betriebsbereiten Zustand, das bedeutet mit installierten Dichtungsaufnahmeelementen 19 und Dichtungseinrichtungen 102, welche an dem Drehflügelhauptkörper 20 befestigt sind. Dargestellt sind das erste und das zweite Dichtungselementteil 12a', 12b', welche in der Aufnahmenut 27 je eines Dichtungsaufnahmeelements 19 angeordnet sind.

Die Dichtungsaufnahmeelemente 19 sind mittels Formschluss mit dem Drehflügelhauptkörper verbunden, indem die T-förmigen Vorsprünge der Verbindungsschnittstelle der beiden Dichtungsaufnahmeelemente 19 in den entsprechend komplementären T-förmigen Vertiefungen des Drehflügelhauptkörpers 20 aufgenommen sind.

### Bezugszeichenliste

- 101, 102: Dichtungseinrichtung
- 200: Drehflügelrudermaschine
- 201: Ruderschaft
- 202: Rotor
- 203: Stator
- 204: Zuführeinrichtung für Hydraulikflüssigkeit

- 10: feststehende Trennwand
- 11: Drehflügel
- 12, 12': erstes Dichtungselement
- 12a, 12a': erstes Dichtungselementteil
- 12b, 12b': zweites Dichtungselementteil
- 13a, 13a': erste Dichtfläche
- 13b, 13b': zweite Dichtfläche
- 14a, 14a': erste Ausnehmung
- 14 b: Ausnehmungen der ersten Ausnehmungsgruppe
- 15a, 15a': zweite Ausnehmung
- 15 b, c: Ausnehmung der zweiten Ausnehmungsgruppe
- 16: Gegenfläche
- 17a: erste Ausnehmungsgruppe
- 17b: zweite Ausnehmungsgruppe
- 18a, 18b: Verbindungsstrukturen
- 19: Dichtungsaufnahmeelement
- 20: Drehflügelhauptkörper
- 21: erste Verbindungsschnittstelle
- 22: zweite Verbindungsschnittstelle
- 23: Trennwandnut
- 24: Druckbeaufschlagungsflächen
- 25: Wandabschnitt
- 26a, b: Dichtungselementabschnitte
- 27: Aufnahmenut für Dichtungseinrichtung
- 28: Langseiten
- 29: Kurzseiten

- 30a, 30b: Verbindungsstrukturen
- 31: Aufnahmeabschnitt
- 32: Grundkörper
- 33: Halteeinrichtung
- 33a, 33b: Halteelemente
- 34a, 34b: Verbindungsstrukturen
- 34aa: Führungsfläche
- 34aaa: Stufe
- 35: Nut
- 36: Ausgleichsöffnung
- A1: erster Raum
- A2: zweiter Raum
- B1: Breite der ersten Dichtungsfläche
- B2: Breite des Dichtungselements
- D: Druck

## Patentansprüche

1. Dichtungseinrichtung (101, 102) zum Abdichten einer feststehenden Trennwand (10) oder eines Drehflügels (11) einer Drehflügelrudermaschine (200), wobei die Dichtungseinrichtung (101, 102) zumindest abschnittsweise an der Trennwand (10) oder des Drehflügels (11) anordbar ist, wobei die Dichtungseinrichtung (101, 102) wenigstens ein erstes Dichtungselement (12, 12') umfasst, wobei das erste Dichtungselement (12, 12') eine erste Dichtfläche (13a, 13a') und eine erste Ausnehmung (14a, 14a') umfasst, wobei die erste Ausnehmung (14a, 14a') derart in dem ersten Dichtungselement (12, 12') angeordnet ist, dass eine Fluidverbindung zwischen der ersten Ausnehmung (14a, 14a') und einem von der Dichtungseinrichtung (101, 102) abzudichtenden ersten Raum (A1), insbesondere einem ersten Hydraulikraum der Drehflügelrudermaschine (200), herstellbar ist, wobei die erste Ausnehmung (14a, 14a') derart in dem Dichtungselement (12) angeordnet ist, dass bei einer Füllung der ersten Ausnehmung (14a, 14a') mit einem druckbeaufschlagten Fluid aus dem ersten Raum (A1) die Dichtungseinrichtung (101, 102) im Bereich der ersten Dichtfläche (13a, 13a') zumindest bereichsweise an eine der ersten Dichtfläche (13a, 13a') gegenüberliegende Gegenfläche (16) anpressbar ist.

2. Dichtungseinrichtung (101, 102) nach Anspruch 1, wobei die erste Ausnehmung (14a, 14a') eine schlitzartige Vertiefung ist, welche sich entlang, bevorzugt im Wesentlichen parallel zu, der ersten Dichtfläche (13a, 13a') erstreckt.

3. Dichtungseinrichtung (101, 102) nach einem der vorgenannten Ansprüche, wobei die erste Ausnehmung (14a, 14a') sich wenigstens über 50% einer Breite (B1) der ersten Dichtungsfläche (13a, 13a') erstreckt.

4. Dichtungseinrichtung (101, 102) nach einem der vorgenannten Ansprüche, wobei die erste Ausnehmung (14a) zu einer ersten Ausnehmungsgruppe (17a) des ersten Dichtungselements (12) gehört, wobei die erste Ausnehmungsgruppe (17a) eine Vielzahl von, insbesondere identisch geformten, Ausnehmungen (14a, 14b), insbesondere zwei oder drei Ausnehmungen (14a, 14b), umfasst, welche jeweils derart in dem ersten Dichtungselement (12) angeordnet sind, dass eine Fluidverbindung zwischen der jeweiligen Ausnehmung (14a, 14b) und dem von der Dichtungseinrichtung (101, 102) abzudichtenden ersten Raum (A1), insbesondere dem ersten Hydraulikraum der Drehflügelrudermaschine (200), herstellbar ist, wobei jede der Ausnehmungen (14a, 14b) derart in dem Dichtungselement (12) angeordnet ist, dass bei einer Füllung der jeweiligen Ausnehmung (14a, 14b) mit einem druckbeaufschlagten Fluid aus dem ersten Raum (A1) die Dichtungseinrichtung (101, 102) im Bereich der ersten Dichtfläche (13a) zumindest bereichsweise an eine der ersten Dichtfläche (13a) gegenüberliegende Gegenfläche (16) anpressbar ist.

5. Dichtungseinrichtung (101, 102) nach einem der vorgenannten Ansprüche, wobei das erste Dichtungselement (12) wenigstens eine zweite Ausnehmung (15a) umfasst, wobei die zweite Ausnehmung (15a) derart in dem ersten Dichtungselement (12) angeordnet ist, dass eine Fluidverbindung zwischen der zweiten Ausnehmung (15a) und einem von der Dichtungseinrichtung (101, 102) abzudichtenden zweiten Raum (A2), insbesondere einem zweiten Hydraulikraum der Drehflügelrudermaschine (200), herstellbar ist, wobei die zweite Ausnehmung (15a) derart in dem Dichtungselement (12) angeordnet ist, dass bei einer Füllung der zweiten Ausnehmung (15a) mit einem druckbeaufschlagten Fluid aus dem zweiten Raum (A2) die Dichtungseinrichtung (101, 102) im Bereich der ersten Dichtfläche (13a) zumindest bereichsweise an eine der ersten Dichtfläche (13a) gegenüberliegende Gegenfläche (16) anpressbar ist, bevorzugt wobei die zweite Ausnehmung (15a) zu einer zweiten Ausnehmungsgruppe (17b) des ersten Dichtungselements (12) gehört, wobei die zweite Ausnehmungsgruppe (17b) eine Vielzahl von, insbesondere identisch geformten, Ausnehmungen (15a, 15b, 15c), insbesondere zwei oder drei Ausnehmungen (15a, 15b, 15c), umfasst, welche jeweils derart in dem ersten Dichtungselement (12) angeordnet sind, dass eine Fluidverbindung zwischen der jeweiligen Ausnehmung (15a, 15b, 15c) und dem von der Dichtungseinrichtung (101, 102) abzudichtenden zweiten Raum (A1), insbesondere dem zweiten Hydraulikraum der Drehflügelrudermaschine, herstellbar ist, wobei jede der Ausnehmungen (15a, 15b, 15c) derart in dem Dichtungselement (101, 102) angeordnet ist, dass bei einer Füllung der jeweiligen Ausnehmung (15a, 15b, 15c) mit einem druckbeaufschlagten Fluid aus dem zweiten Raum (A2) die Dichtungseinrichtung (101, 102) im Bereich der ersten Dichtfläche (13a) zumindest bereichsweise an eine der ersten Dichtfläche (13a) gegenüberliegende Gegenfläche (16) anpressbar ist.

6. Dichtungseinrichtung (101, 102) nach einem der Ansprüche 4 bis 5, wobei sich die Ausnehmungen der ersten Ausnehmungsgruppe (17a) und der zweiten Ausnehmungsgruppe (17b) und/oder jeweils die Ausnehmungen einer zweiten und/oder ersten Ausnehmungsgruppe (17a, 17b) untereinander überlagern in einer Richtung senkrecht zur Dichtfläche (13a) betrachtet, insbesondere derart, dass das erste Dichtungselement (12) in einer Querschnittsbetrachtung entlang einer Breite (B2) des Dichtungselements (12) zumindest abschnittsweise oder vollständig mäanderförmig ausgestaltet ist, wobei bevorzugt sämtliche Ausnehmungen der ersten Ausnehmungsgruppe (17a) und der zweiten Ausnehmungsgruppe (17b) die gleiche Form aufweisen.

7. Dichtungseinrichtung (101, 102) nach einem der vorgenannten Ansprüche, wobei das erste Dichtungselement (12, 12') Polyoxymethylen-Homopolymer, Polyoxymethlyen Copolymer oder Mischungen hieraus umfasst oder aus Polyoxymethylen-Homopolymer, Polyoxymethlyen Copolymer oder Mischungen hieraus besteht.

8. Dichtungseinrichtung nach Anspruch 1, wobei das erste Dichtungselement (12') rahmenartig ausgebildet ist, derart, dass sich das Dichtungselement (12') entlang einer ersten Längskante des Drehflügels (11) und entlang einer zweiten Längskante des Drehflügels (11) erstreckt, wobei bevorzugt das erste Dichtungselement (12') zweitteilig ausgebildet ist mit einem ersten Dichtungselementteil (12a') und einem zweiten Dichtungselementteil (12b'), wobei der erste und der zweite Dichtungselementteil (12a', 12b') derart zusammensetzbar sind, dass eine im Wesentlichen geschlossene, um den ersten und den zweiten Dichtungselementteil (12a', 12b') umlaufende Dichtfläche bildbar ist.

9. Dichtungseinrichtung (101, 102) nach Anspruch 9, wobei der erste und der zweite Dichtungselementteil (12a', 12b') jeweils eine Verbindungsstruktur (18a, 18b) aufweist zum, insbesondere formschlüssigen, Verbinden des ersten mit dem zweiten Dichtungselementteils (12a', 12b').

10. Drehflügelrudermaschine (200) umfassend wenigstens eine Dichtungseinrichtung (101, 102) nach einem der vorgenannten Ansprüche.

11. Drehflügelrudermaschine (200) nach Anspruch 10, aufweisend einen Drehflügel (11) zur abdichtenden Trennung eines ersten Hydraulikraums von einem zweiten Hydraulikraum mittels der Dichtungseinrichtung (102), wobei der Drehflügel (11) wenigstens einen, bevorzugt zwei, Dichtungsaufnahmeelemente (19) aufweist, wobei die Dichtungseinrichtung (101) an dem Dichtungsaufnahmeelement (19) angeordnet ist, wobei das Dichtungsaufnahmeelement (19) zusammen mit der Dichtungseinrichtung (102) lösbar an dem Drehflügel (11) angeordnet ist.

12. Drehflügelrudermaschine (200) nach Anspruch 11, wobei der Drehflügel (11) einen Drehflügelhauptkörper (20) umfasst, wobei das Dichtungsaufnahmeelement (19) lösbar an dem Drehflügelhauptkörper (20) befestigt ist, wobei das Dichtungsaufnahmeelement (19) eine erste Verbindungsschnittstelle (21) und der Drehflügelhauptkörper (20) eine zweite Verbindungsschnittstelle (22) zur lösbaren Verbindung des Dichtungsaufnahmeelements (19) mit dem Drehflügelhauptkörper (20) aufweist, wobei die erste und die zweite Verbindungsschnittstelle (21, 22) bevorzugt formschlüssig miteinander verbindbar sind, wobei insbesondere eine der Verbindungsschnittstellen (21, 22) einen länglichen Verbindungsvorsprung aufweist und wobei der andere der beiden Verbindungsstellen (22, 21) eine komplementär zum länglichen Verbindungsvorsprung ausgebildete längliche Verbindungsvertiefung aufweist.

13. Drehflügelrudermaschine (200) nach einem der Ansprüche 10 bis 12, wobei das Dichtungsaufnahmeelement (19) einen Aufnahmeabschnitt (31) aufweist, an welchem das erste Dichtungselement (12) umlaufend anordbar ist, und eine Halteeinrichtung (33), welche lösbar an dem Aufnahmeabschnitt (31) befestigbar ist, derart, dass das erste Dichtungselement (12') mittels der Halteeinrichtung (33) an dem Aufnahmeabschnitt (31) befestigt ist, wobei bevorzugt die Halteeinrichtung (33) zur Befestigung an dem Aufnahmeabschnitt (31) in eine an dem Aufnahmeabschnitt (31) angeordneten, insbesondere umlaufenden, Nut (35) einsetzbar ist.

14. Drehflügelrudermaschine (200) nach Anspruch 13, wobei die Halteeinrichtung (33) rahmenartig ausgebildet mit einem ersten Halteteil (33a) und einem zweiten Halteteil (33b), wobei bevorzugt die beiden Halteteile (33a, 33b) separat voneinander an den Aufnahmeabschnitt (31) anordbar sind, bevorzugt durch Einschieben der Halteteile (33a, 33b) in die Nut (35), wobei bevorzugt die Halteteile (33a, 33b) formschlüssig miteinander verbindbar sind, wobei das erste Halteteil (33a) eine erste Verbindungsstruktur (34a) aufweist, welche zum Eingriff mit einer komplementär zur ersten Verbindungstruktur (34a) ausgebildeten zweiten Verbindungsstruktur (34b) ausgebildet ist, wobei bevorzugt die Verbindungsstrukturen (34a, 34b) jeweils schräg verlaufende Führungsflächen (34aa) aufweisen und jeweils eine Stufe (34aaa) umfassen, welche zum Eingriff miteinander ausgebildet sind.

15. Verfahren zum Montieren einer Drehflügelrudermaschine (200) nach einem der Ansprüche 11 bis 14, umfassend die folgenden Schritte:
- Anordnen der Dichtungseinrichtung (101, 102), insbesondere eines ersten Dichtungselements (12') und des zweiten Dichtungselements (12'), an dem Dichtungsaufnahmeelement (19), und, insbesondere anschließendes,
- Einsetzen der Anordnung umfassend das Dichtungsaufnahmeelement (19) und die Dichtungseinrichtung (101, 102) in die Drehflügelrudermaschine (200) und insbesondere Befestigen der Anordnung an einem Drehflügelhauptkörper (20) des Drehflügels (11).

## Geänderte Patentansprüche

### Geänderte Patentansprüche gemäss Regel 137(2) EPÜ.

1. Dichtungseinrichtung (101, 102) zum Abdichten einer feststehenden Trennwand (10) oder eines Drehflügels (11) einer Drehflügelrudermaschine (200), wobei die Dichtungseinrichtung (101, 102) zumindest abschnittsweise an der Trennwand (10) oder des Drehflügels (11) anordbar ist, wobei die Dichtungseinrichtung (101, 102) wenigstens ein erstes Dichtungselement (12, 12') umfasst, wobei das erste Dichtungselement (12, 12') eine erste Dichtfläche (13a, 13a') und eine erste Ausnehmung (14a, 14a') umfasst, wobei die erste Ausnehmung (14a, 14a') derart in dem ersten Dichtungselement (12, 12') angeordnet ist, dass eine Fluidverbindung zwischen der ersten Ausnehmung (14a, 14a') und einem von der Dichtungseinrichtung (101, 102) abzudichtenden ersten Raum (A1), insbesondere einem ersten Hydraulikraum der Drehflügelrudermaschine (200), herstellbar ist, wobei die erste Ausnehmung (14a, 14a') derart in dem Dichtungselement (12) angeordnet ist, dass bei einer Füllung der ersten Ausnehmung (14a, 14a') mit einem druckbeaufschlagten Fluid aus dem ersten Raum (A1) die Dichtungseinrichtung (101, 102) im Bereich der ersten Dichtfläche (13a, 13a') zumindest bereichsweise an eine der ersten Dichtfläche (13a, 13a') gegenüberliegende Gegenfläche (16) anpressbar ist, wobei die erste Ausnehmung (14a) zu einer ersten Ausnehmungsgruppe (17a) des ersten Dichtungselements (12) gehört, wobei die erste Ausnehmungsgruppe (17a) eine Vielzahl von, insbesondere identisch geformten, Ausnehmungen (14a, 14b), insbesondere zwei oder drei Ausnehmungen (14a, 14b), umfasst, welche jeweils derart in dem ersten Dichtungselement (12) angeordnet sind, dass eine Fluidverbindung zwischen der jeweiligen Ausnehmung (14a, 14b) und dem von der Dichtungseinrichtung (101, 102) abzudichtenden ersten Raum (A1), insbesondere dem ersten Hydraulikraum der Drehflügelrudermaschine (200), herstellbar ist, wobei jede der Ausnehmungen (14a, 14b) derart in dem Dichtungselement (12) angeordnet ist, dass bei einer Füllung der jeweiligen Ausnehmung (14a, 14b) mit einem druckbeaufschlagten Fluid aus dem ersten Raum (A1) die Dichtungseinrichtung (101, 102) im Bereich der ersten Dichtfläche (13a) zumindest bereichsweise an eine der ersten Dichtfläche (13a) gegenüberliegende Gegenfläche (16) anpressbar ist, und wobei sich die Ausnehmungen der Ausnehmungsgruppe (17a, 17b) untereinander überlagern in einer Richtung senkrecht zur Dichtfläche (13a) betrachtet.

2. Dichtungseinrichtung (101, 102) nach Anspruch 1, wobei die erste Ausnehmung (14a, 14a') eine schlitzartige Vertiefung ist, welche sich entlang, bevorzugt im Wesentlichen parallel zu, der ersten Dichtfläche (13a, 13a') erstreckt.

3. Dichtungseinrichtung (101, 102) nach einem der vorgenannten Ansprüche, wobei die erste Ausnehmung (14a, 14a') sich wenigstens über 50% einer Breite (B1) der ersten Dichtungsfläche (13a, 13a') erstreckt.

4. Dichtungseinrichtung (101, 102) nach einem der vorgenannten Ansprüche, wobei das erste Dichtungselement (12) wenigstens eine zweite Ausnehmung (15a) umfasst, wobei die zweite Ausnehmung (15a) derart in dem ersten Dichtungselement (12) angeordnet ist, dass eine Fluidverbindung zwischen der zweiten Ausnehmung (15a) und einem von der Dichtungseinrichtung (101, 102) abzudichtenden zweiten Raum (A2), insbesondere einem zweiten Hydraulikraum der Drehflügelrudermaschine (200), herstellbar ist, wobei die zweite Ausnehmung (15a) derart in dem Dichtungselement (12) angeordnet ist, dass bei einer Füllung der zweiten Ausnehmung (15a) mit einem druckbeaufschlagten Fluid aus dem zweiten Raum (A2) die Dichtungseinrichtung (101, 102) im Bereich der ersten Dichtfläche (13a) zumindest bereichsweise an eine der ersten Dichtfläche (13a) gegenüberliegende Gegenfläche (16) anpressbar ist, bevorzugt wobei die zweite Ausnehmung (15a) zu einer zweiten Ausnehmungsgruppe (17b) des ersten Dichtungselements (12) gehört, wobei die zweite Ausnehmungsgruppe (17b) eine Vielzahl von, insbesondere identisch geformten, Ausnehmungen (15a, 15b, 15c), insbesondere zwei oder drei Ausnehmungen (15a, 15b, 15c), umfasst, welche jeweils derart in dem ersten Dichtungselement (12) angeordnet sind, dass eine Fluidverbindung zwischen der jeweiligen Ausnehmung (15a, 15b, 15c) und dem von der Dichtungseinrichtung (101, 102) abzudichtenden zweiten Raum (A1), insbesondere dem zweiten Hydraulikraum der Drehflügelrudermaschine, herstellbar ist, wobei jede der Ausnehmungen (15a, 15b, 15c) derart in dem Dichtungselement (101, 102) angeordnet ist, dass bei einer Füllung der jeweiligen Ausnehmung (15a, 15b, 15c) mit einem druckbeaufschlagten Fluid aus dem zweiten Raum (A2) die Dichtungseinrichtung (101, 102) im Bereich der ersten Dichtfläche (13a) zumindest bereichsweise an eine der ersten Dichtfläche (13a) gegenüberliegende Gegenfläche (16) anpressbar ist.

5. Dichtungseinrichtung (101, 102) nach Anspruch 4, wobei sich die Ausnehmungen der ersten Ausnehmungsgruppe (17a) und der zweiten Ausnehmungsgruppe (17b) oder jeweils die Ausnehmungen einer zweiten Ausnehmungsgruppe (17a, 17b) untereinander überlagern in einer Richtung senkrecht zur Dichtfläche (13a) betrachtet, insbesondere derart, dass das erste Dichtungselement (12) in einer Querschnittsbetrachtung entlang einer Breite (B2) des Dichtungselements (12) zumindest abschnittsweise oder vollständig mäanderförmig ausgestaltet ist, wobei bevorzugt sämtliche Ausnehmungen der ersten Ausnehmungsgruppe (17a) und der zweiten Ausnehmungsgruppe (17b) die gleiche Form aufweisen.

6. Dichtungseinrichtung (101, 102) nach einem der vorgenannten Ansprüche, wobei das erste Dichtungselement (12, 12') Polyoxymethylen-Homopolymer, Polyoxymethlyen Copolymer oder Mischungen hieraus umfasst oder aus Polyoxymethylen-Homopolymer, Polyoxymethlyen Copolymer oder Mischungen hieraus besteht.

7. Dichtungseinrichtung nach Anspruch 1, wobei das erste Dichtungselement (12') rahmenartig ausgebildet ist, derart, dass sich das Dichtungselement (12') entlang einer ersten Längskante des Drehflügels (11) und entlang einer zweiten Längskante des Drehflügels (11) erstreckt, wobei bevorzugt das erste Dichtungselement (12') zweitteilig ausgebildet ist mit einem ersten Dichtungselementteil (12a') und einem zweiten Dichtungselementteil (12b'), wobei der erste und der zweite Dichtungselementteil (12a', 12b') derart zusammensetzbar sind, dass eine im Wesentlichen geschlossene, um den ersten und den zweiten Dichtungselementteil (12a', 12b') umlaufende Dichtfläche bildbar ist.

8. Dichtungseinrichtung (101, 102) nach Anspruch 7, wobei der erste und der zweite Dichtungselementteil (12a', 12b') jeweils eine Verbindungsstruktur (18a, 18b) aufweist zum, insbesondere formschlüssigen, Verbinden des ersten mit dem zweiten Dichtungselementteils (12a', 12b').

9. Drehflügelrudermaschine (200) umfassend wenigstens eine Dichtungseinrichtung (101, 102) nach einem der vorgenannten Ansprüche.

10. Drehflügelrudermaschine (200) nach Anspruch 9, aufweisend einen Drehflügel (11) zur abdichtenden Trennung eines ersten Hydraulikraums von einem zweiten Hydraulikraum mittels der Dichtungseinrichtung (102), wobei der Drehflügel (11) wenigstens einen, bevorzugt zwei, Dichtungsaufnahmeelemente (19) aufweist, wobei die Dichtungseinrichtung (101) an dem Dichtungsaufnahmeelement (19) angeordnet ist, wobei das Dichtungsaufnahmeelement (19) zusammen mit der Dichtungseinrichtung (102) lösbar an dem Drehflügel (11) angeordnet ist.

11. Drehflügelrudermaschine (200) nach Anspruch 10, wobei der Drehflügel (11) einen Drehflügelhauptkörper (20) umfasst, wobei das Dichtungsaufnahmeelement (19) lösbar an dem Drehflügelhauptkörper (20) befestigt ist, wobei das Dichtungsaufnahmeelement (19) eine erste Verbindungsschnittstelle (21) und der Drehflügelhauptkörper (20) eine zweite Verbindungsschnittstelle (22) zur lösbaren Verbindung des Dichtungsaufnahmeelements (19) mit dem Drehflügelhauptkörper (20) aufweist, wobei die erste und die zweite Verbindungsschnittstelle (21, 22) bevorzugt formschlüssig miteinander verbindbar sind, wobei insbesondere eine der Verbindungsschnittstellen (21, 22) einen länglichen Verbindungsvorsprung aufweist und wobei der andere der beiden Verbindungsstellen (22, 21) eine komplementär zum länglichen Verbindungsvorsprung ausgebildete längliche Verbindungsvertiefung aufweist.

12. Drehflügelrudermaschine (200) nach einem der Ansprüche 9 bis 11, wobei das Dichtungsaufnahmeelement (19) einen Aufnahmeabschnitt (31) aufweist, an welchem das erste Dichtungselement (12) umlaufend anordbar ist, und eine Halteeinrichtung (33), welche lösbar an dem Aufnahmeabschnitt (31) befestigbar ist, derart, dass das erste Dichtungselement (12') mittels der Halteeinrichtung (33) an dem Aufnahmeabschnitt (31) befestigt ist, wobei bevorzugt die Halteeinrichtung (33) zur Befestigung an dem Aufnahmeabschnitt (31) in eine an dem Aufnahmeabschnitt (31) angeordneten, insbesondere umlaufenden, Nut (35) einsetzbar ist.

13. Drehflügelrudermaschine (200) nach Anspruch 12, wobei die Halteeinrichtung (33) rahmenartig ausgebildet mit einem ersten Halteteil (33a) und einem zweiten Halteteil (33b), wobei bevorzugt die beiden Halteteile (33a, 33b) separat voneinander an den Aufnahmeabschnitt (31) anordbar sind, bevorzugt durch Einschieben der Halteteile (33a, 33b) in die Nut (35), wobei bevorzugt die Halteteile (33a, 33b) formschlüssig miteinander verbindbar sind, wobei das erste Halteteil (33a) eine erste Verbindungsstruktur (34a) aufweist, welche zum Eingriff mit einer komplementär zur ersten Verbindungstruktur (34a) ausgebildeten zweiten Verbindungsstruktur (34b) ausgebildet ist, wobei bevorzugt die Verbindungsstrukturen (34a, 34b) jeweils schräg verlaufende Führungsflächen (34aa) aufweisen und jeweils eine Stufe (34aaa) umfassen, welche zum Eingriff miteinander ausgebildet sind.

14. Verfahren zum Montieren einer Drehflügelrudermaschine (200) nach einem der Ansprüche 10 bis 13, umfassend die folgenden Schritte:
- Anordnen der Dichtungseinrichtung (101, 102), insbesondere eines ersten Dichtungselements (12') und des zweiten Dichtungselements (12'), an dem Dichtungsaufnahmeelement (19), und, insbesondere anschließendes,
- Einsetzen der Anordnung umfassend das Dichtungsaufnahmeelement (19) und die Dichtungseinrichtung (101, 102) in die Drehflügelrudermaschine (200) und insbesondere Befestigen der Anordnung an einem Drehflügelhauptkörper (20) des Drehflügels (11).
